# EUROPEAN PATENT SPECIFICATION

(11) **EP 2 996 362 B1**
(45) Date of publication and mention of the grant of the patent: **11.10.2017**
(21) Application number: 13886048.1
(22) Date of filing: 28.05.2013
(51) Int. Cl.: H04W 4/06

(54) **METHOD, DEVICE, EQUIPMENT, AND SYSTEM FOR SERVICE TRANSMISSION**
VERFAHREN, VORRICHTUNG, AUSRÜSTUNG UND SYSTEM ZUR DIENSTÜBERTRAGUNG
PROCÉDÉ, DISPOSITIF, ÉQUIPEMENT ET SYSTÈME DE TRANSMISSION DE SERVICE

(43) Date of publication of application: 16.03.2016
(73) Proprietor: Huawei Technologies Co., Ltd., Longgang District Shenzhen, Guangdong 518129 (CN)
(72) Inventor: HU, Zhenxing, Shenzhen Guangdong 518129 (CN); QUAN, Wei, Shenzhen Guangdong 518129 (CN); ZHANG, Jian, Shenzhen Guangdong 518129 (CN)
(74) Representative: Pfenning, Meinig & Partner mbB
(86) International application number: PCT/CN2013/076341
(87) International publication number: WO 2014/190493

(56) References cited:
- EP-A1- 2 487 939
- EP-A1- 2 512 160
- EP-A1- 2 654 325
- CN-A- 101 626 545
- CN-A- 101 656 915
- CN-A- 101 656 915
- CN-A- 101 707 737
- CN-A- 101 998 264
- MX-A- 2011 000 387

## Description

### TECHNICAL FIELD

The present invention relates to the field of communications, and in particular, to a service transmission method, apparatus, device, and system.

### BACKGROUND

An MBMS (Multimedia Broadcast Multicast Service, multimedia broadcast multicast service) is a technology introduced in release R9 of LTE (LongTermEvolution, Long Term Evolution), and is used for providing multimedia broadcast and multicast services for a user in an LTE wireless cell.

A current MBMS transmission process is approximately as follows: an eNB (Evolved NodeB, evolved NodeB) provides an MBSFN subframe configuration and a program information table to UE (User Equipment, user equipment), where the program information table may be carried in a PMCH-InfoList (Physical Multicast Channel Information List, physical multicast channel information list). After receiving the program information table, the UE may choose to listen to which program based on a subscription or favorite policy, and then receive an MBMS service corresponding to the program according to the MBSFN subframe configuration.

During implementation of the present invention, the prior art has at least the following problem: for an MBMS service, a program information table needs to be provided to UE in advance, so that the UE selectively receives a program. However, triggering of an emergency service or a burst service cannot be predicted, and information such as the program information table cannot be provided to the UE in advance, and therefore a conventional MBMS cannot transmit the emergency service or the burst service.

EP 2 487 939 A1 as well as EP 2 512 160 A1 disclose a methods for monitoring Multicast Control Channel (MCCH) notification information in a cell that includes more than one MCCH by determining, by the UE, whether there is a correspondence between one of the MCCH and a required MBMS and, then, only monitoring the MCCH which corresponds to the requires service.

MX 2011 000387 A discloses a mthod for improving the enhanced multimedia broadcast multicast service transmission (EMBMS) receiving quality of the UE.

CN 101656915 A discloses a method for transmitting disaster notification information and emergency notification information in an emergency alarm system using the universal territorial radio access network.

### EP 2 654 325 A1 DISCLOSES A METHOD AND SYSTEM FOR TRANSMITTING A MULTICAST CONTROL CHANNEL CHANGE NOTIFICATION ON A DEACTIVATED CELL.SUMMARY

The subject matter of the present invention is defined by the accompanying claims. Further embodiments not covered by the claims are included as background information for promoting a deeper understanding of the invention.

To resolve a technical problem that a conventional MBMS cannot transmit an emergency service or a burst service, embodiments of the present invention provide a service transmission method, apparatus, device, and system. The technical solution is as follows:
According to a first aspect, a service transmission method is provided, which is applied to a base station, where the method includes:
sending configuration information of a service to user equipment UE;
sending an arrival indication of the service to the UE; and
sending the service according to the configuration information of the service, so that after receiving the arrival indication of the service, the UE receives the service according to the configuration information of the service.

In a first possible implementation manner of the first aspect, the configuration information of the service includes:
a non-multimedia broadcast multicast service single frequency network MBSFN area length and a modulation and coding scheme; or
a non-MBSFN area length, a modulation and coding scheme, and an MBSFN subframe configuration corresponding to the service; or
an MBSFN area identifier; or
a subframe configuration corresponding to the service and a modulation and coding scheme.

With reference to the first possible implementation manner of the first aspect, in a second possible implementation manner, the MBSFN subframe configuration corresponding to the service includes:
an MBSFN subframe corresponding to the service; or
a time frequency resource corresponding to the service in an MBSFN subframe; or
an MBSFN subframe corresponding to the service, and a time frequency resource corresponding to the service in the MBSFN subframe.

With reference to the first possible implementation manner of the first aspect, in a third possible implementation manner, the subframe configuration corresponding to the service includes:
a subframe corresponding to the service; or
a time frequency resource corresponding to the service in a subframe; or
a subframe corresponding to the service, and a time frequency resource corresponding to the service in the subframe.

With reference to any one of the first aspect, and the first to third possible implementation manners of the first aspect, in a fourth possible implementation manner, the sending configuration information of the service to user equipment UE includes:
sending the configuration information of the service to the UE by using a broadcast message; or
sending the configuration information of the service to the UE by using a paging message.

With reference to the fourth possible implementation manner of the first aspect, in a fifth possible implementation manner, the sending the configuration information of the service to the UE by using a broadcast message includes:
sending the configuration information of the service to the UE by using a system information block SIB in the broadcast message, where the SIB is any SIB.

With reference to the first aspect, and the first to fifth possible implementation manners of the first aspect, in a sixth possible implementation manner, the sending an arrival indication of the service to the UE includes:
sending the arrival indication of the service to the UE by using a paging message;
or sending configuration information of an MCCH change notification corresponding to the service to the UE by using a broadcast message, where the MCCH change notification is used for sending the arrival indication of the service to the UE; or
sending the arrival indication of the service to the UE by using a paging message, and sending configuration information of an MCCH change notification corresponding to the service to the UE by using a broadcast message, where the MCCH change notification is used for sending the arrival indication of the service to the UE.

With reference to the first aspect, and the first to sixth possible implementation manners of the first aspect, in a seventh possible implementation manner, after the sending the service according to the configuration information of the service, the method further includes:
sending a service stop indication to the UE, so that after receiving the service stop indication, the UE stops receiving the service.

With reference to the seventh possible implementation manner of the first aspect, in an eighth possible implementation manner, the sending a service stop indication to the UE includes:
sending the service stop indication to the UE by using a paging message; or
adding a predetermined quantity of empty data packets to a tail of the sent service, where the predetermined quantity of empty data packets are used as the service stop indication; or
sending Media Access Control MAC control signaling of a predetermined format to the UE, where the MAC control signaling of the predetermined format is used as the service stop indication.

With reference to the first aspect, and the first to eighth possible implementation manners of the first aspect, in a ninth possible implementation manner, before the sending configuration information of the service to user equipment UE, the method further includes:
receiving the configuration information of the service sent by a multi-cell/multicast coordination entity MCE.

With reference to the ninth possible implementation manner of the first aspect, in a tenth possible implementation manner, before the receiving the configuration information of the service sent by a multi-cell/multicast coordination entity MCE, the method further includes:
sending an M2 setup request to the MCE; and
the receiving the configuration information of the service sent by a multi-cell/multicast coordination entity MCE includes:
   receiving an M2 setup response fed back by the MCE, where the M2 setup response carries the configuration information of the service.

With reference to the second possible implementation manner of the first aspect, in an eleventh possible implementation manner, if the configuration information of the service includes: the time frequency resource corresponding to the service in the MBSFN subframe; or the MBSFN subframe corresponding to the service, and the time frequency resource corresponding to the service in the MBSFN subframe,
before the sending the service according to the configuration information of the service, the method further includes:
   receiving a capability indication reported by the UE, where the capability indication denotes that the UE possesses a capability of receiving the service and another service simultaneously in the MBSFN subframe corresponding to the service; and
   the sending the service according to the configuration information of the service includes:
      sending the service in the time frequency resource corresponding to the service in the MBSFN subframe configured in the configuration information of the service, and sending the another service in a time frequency resource not corresponding to the service in the MBSFN subframe.

With reference to the third possible implementation manner of the first aspect, in a twelfth possible implementation manner, if the configuration information of the service includes: the time frequency resource corresponding to the service in the subframe; or the subframe corresponding to the service, and the time frequency resource corresponding to the service in the subframe,
before the sending the service according to the configuration information of the service, the method further includes:
   receiving a capability indication reported by the UE, where the capability indication denotes that the UE possesses a capability of receiving the service and another service simultaneously in the subframe corresponding to the service; and
   the sending the service according to the configuration information of the service includes:
      sending the service in the time frequency resource corresponding to the service in the subframe, the time frequency being configured in the configuration information of the service, and sending the another service in a time frequency resource not corresponding to the service in the subframe.

According to a second aspect, a service transmission method is provided, which is applied to a terminal, where the method includes:
receiving configuration information of a service sent by a base station;
receiving an arrival indication of the service sent by the base station; and
after receiving the arrival indication of the service, receiving the service according to the configuration information of the service, where the service is sent by the base station according to the configuration information of the service.

In a first possible implementation manner of the second aspect, the configuration information of the service includes:
a non-multimedia broadcast multicast service single frequency network MBSFN area length and a modulation and coding scheme; or
a non-MBSFN area length, a modulation and coding scheme, and an MBSFN subframe configuration corresponding to the service; or
an MBSFN area identifier; or
a subframe configuration corresponding to the service and a modulation and coding scheme.

With reference to the first possible implementation manner of the second aspect, in a second possible implementation manner, the MBSFN subframe configuration corresponding to the service includes:
an MBSFN subframe corresponding to the service; or
a time frequency resource corresponding to the service in an MBSFN subframe; or
an MBSFN subframe corresponding to the service, and a time frequency resource corresponding to the service in the MBSFN subframe.

With reference to the first possible implementation manner of the second aspect, in a third possible implementation manner, the subframe configuration corresponding to the service includes:
a subframe corresponding to the service; or
a time frequency resource corresponding to the service in a subframe; or
a subframe corresponding to the service, and a time frequency resource corresponding to the service in the subframe.

With reference to any one of the second aspect, and the first to third possible implementation manners of the second aspect, in a fourth possible implementation manner, the receiving configuration information of the service sent by a base station includes:
receiving the configuration information of the service that is sent by the base station by using a broadcast message; or
receiving the configuration information of the service that is sent by the base station by using a paging message.

With reference to the fourth possible implementation manner of the second aspect, in a fifth possible implementation manner, the receiving the configuration information of the service that is sent by the base station by using a broadcast message includes:
receiving the configuration information of the service that is sent by the base station by using a system information block SIB in broadcast information, where the SIB is any SIB.

With reference to the second aspect, and the first to fifth possible implementation manners of the second aspect, in a sixth possible implementation manner, the receiving an arrival indication of the service sent by the base station includes:
receiving the arrival indication of the service that is sent by the base station by using a paging message; or
receiving configuration information, sent by the base station by using a broadcast message, of an MCCH change notification corresponding to the service; and listening to the MCCH change notification according to the configuration information of the MCCH change notification, where the MCCH change notification is used for sending the arrival indication of the service to the UE; or
receiving the arrival indication of the service that is sent by the base station by using a paging message, and receiving configuration information, sent by the base station by using a broadcast message, of an MCCH change notification corresponding to the service; and listening to the MCCH change notification according to the configuration information of the MCCH change notification, where the MCCH change notification is used for sending the arrival indication of the service to the UE.

With reference to the second aspect, and the first to sixth possible implementation manners of the second aspect, in a seventh possible implementation manner, after the receiving the service according to the configuration information of the service, the method further includes:
receiving a service stop indication sent by the base station; and
after receiving the service stop indication, stopping receiving the service.

With reference to the seventh possible implementation manner of the second aspect, in an eighth possible implementation manner, the receiving a service stop indication sent by the base station includes:
receiving the service stop indication that is sent by the base station to the UE by using a paging message; or
detecting whether a predetermined quantity of empty data packets exist in the received service, where if a detection result is that the predetermined quantity of empty data packets exist, the predetermined quantity of empty data packets are used as the service stop indication; or
receiving Media Access Control MAC control signaling of a predetermined format sent by the base station, where the MAC control signaling of the predetermined format is used as the service stop indication.

With reference to the second possible implementation manner of the second aspect, in a ninth possible implementation manner, if the configuration information of the service includes: the time frequency resource corresponding to the service in the MBSFN subframe; or the MBSFN subframe corresponding to the service, and the time frequency resource corresponding to the service in the MBSFN subframe,
before the receiving the service according to the configuration information of the service, the method further includes:
   sending a capability indication to the base station, where the capability indication denotes that the UE possesses a capability of receiving the service and another service simultaneously in the MBSFN subframe corresponding to the service; and
   the receiving the service according to the configuration information of the service includes:
      receiving the service in the time frequency resource corresponding to the service in the MBSFN subframe configured in the configuration information of the service, and detecting whether the another service exists in a time frequency resource not corresponding to the service in the MBSFN subframe; and
      if a detection result is that the another service exists, receiving the another service in the time frequency resource not corresponding to the service in the MBSFN subframe.

With reference to the third possible implementation manner of the second aspect, in a tenth possible implementation manner, if the configuration information of the service includes: the time frequency resource corresponding to the service in the subframe; or the subframe corresponding to the service, and the time frequency resource corresponding to the service in the subframe,
before the receiving the service according to the configuration information of the service, the method further includes:
   sending a capability indication to the base station, where the capability indication denotes that the UE possesses a capability of receiving the service and another service simultaneously in the subframe corresponding to the service; and
   the receiving the service according to the configuration information of the service includes:
      receiving the service in the time frequency resource corresponding to the service in the subframe, the time frequency being configured in the configuration information of the service, and detecting whether the another service exists in a time frequency resource not corresponding to the service in the subframe; and
      if a detection result is that the another service exists, receiving the another service in the time frequency resource not corresponding to the service in the subframe.

According to a third aspect, a service transmission method is provided, which is applied to a multi-cell/multicast coordination entity MCE, where the method includes:
sending configuration information of the service to a base station, so that the base station receives the configuration information of the service, sends the configuration information of the service to user equipment UE, sends an arrival indication of the service to the UE, and sends the service according to the configuration information of the service, so that after receiving the arrival indication of the service, the UE receives the service according to the configuration information of the service.

In a first possible implementation manner of the third aspect, before the sending configuration information of the service to a base station, the method further includes:
receiving an M2 setup request sent by the base station; and
the sending configuration information of the service to a base station includes:
   feeding back an M2 setup response to the base station, where the M2 setup response carries the configuration information of the service.

With reference to the third aspect or the first possible implementation manner of the third aspect, in a second possible implementation manner, the configuration information of the service includes:
a non-multimedia broadcast multicast service single frequency network MBSFN area length and a modulation and coding scheme; or
a non-MBSFN area length, a modulation and coding scheme, and an MBSFN subframe configuration corresponding to the service; or
an MBSFN area identifier; or
a subframe configuration corresponding to the service and a modulation and coding scheme.

With reference to the second possible implementation manner of the third aspect, in a third possible implementation manner, the MBSFN subframe configuration corresponding to the service includes:
an MBSFN subframe corresponding to the service; or
a time frequency resource corresponding to the service in an MBSFN subframe; or
an MBSFN subframe corresponding to the service, and a time frequency resource corresponding to the service in the MBSFN subframe.

With reference to the second possible implementation manner of the third aspect, in a fourth possible implementation manner, the subframe configuration corresponding to the service includes:
a subframe corresponding to the service; or
a time frequency resource corresponding to the service in a subframe; or
a subframe corresponding to the service, and a time frequency resource corresponding to the service in the subframe.

According to a fourth aspect, a service transmission apparatus is provided, which is applied to a base station, where the apparatus includes:
a configuration sending module, configured to send configuration information of a service to user equipment UE;
an arrival sending module, configured to send an arrival indication of the service to the UE; and
a service sending module, configured to send the service according to the configuration information of the service, so that after receiving the arrival indication of the service, the UE receives the service according to the configuration information of the service.

In a first possible implementation manner of the fourth aspect, the configuration information of the service includes:
a non-multimedia broadcast multicast service single frequency network MBSFN area length and a modulation and coding scheme; or
a non-MBSFN area length, a modulation and coding scheme, and an MBSFN subframe configuration corresponding to the service; or
an MBSFN area identifier; or
a subframe configuration corresponding to the service and a modulation and coding scheme.

With reference to the first possible implementation manner of the fourth aspect, in a second possible implementation manner, the MBSFN subframe configuration corresponding to the service includes:
an MBSFN subframe corresponding to the service; or
a time frequency resource corresponding to the service in an MBSFN subframe; or
an MBSFN subframe corresponding to the service, and a time frequency resource corresponding to the service in the MBSFN subframe.

With reference to the first possible implementation manner of the fourth aspect, in a third possible implementation manner, the subframe configuration corresponding to the service includes:
a subframe corresponding to the service; or
a time frequency resource corresponding to the service in a subframe; or
a subframe corresponding to the service, and a time frequency resource corresponding to the service in the subframe.

With reference to any one of the fourth aspect, and the first to third possible implementation manners of the fourth aspect, in a fourth possible implementation manner, the configuration sending module includes: a first configuration sending unit or a second configuration sending unit, where
the first configuration sending unit is configured to send the configuration information of the service to the UE by using a broadcast message; and
the second configuration sending unit is configured to send the configuration information of the service to the UE by using a paging message.

With reference to the fourth possible implementation manner of the fourth aspect, in a fifth possible implementation manner, the first configuration sending unit is configured to send the configuration information of the service to the UE by using a system information block SIB in the broadcast message, where the SIB is any SIB.

With reference to the fourth aspect, and the first to fifth possible implementation manners of the fourth aspect, in a sixth possible implementation manner, the arrival sending module includes: a first arrival sending unit, a second arrival sending unit, or a third arrival sending unit, where
the first arrival sending unit is configured to send the arrival indication of the service to the UE by using a paging message;
the second arrival sending unit is configured to send configuration information of an MCCH change notification corresponding to the service to the UE by using a broadcast message, where the MCCH change notification is used for sending the arrival indication of the service to the UE; and
the third arrival sending unit is configured to send the arrival indication of the service to the UE by using a paging message, and send configuration information of an MCCH change notification corresponding to the service to the UE by using a broadcast message, where the MCCH change notification is used for sending the arrival indication of the service to the UE.

With reference to the fourth aspect, and the first to sixth possible implementation manners of the fourth aspect, in a seventh possible implementation manner, the apparatus further includes: a stop sending module, where
the stop sending module is configured to send a service stop indication to the UE, so that after receiving the service stop indication, the UE stops receiving the service.

With reference to the seventh possible implementation manner of the fourth aspect, in an eighth possible implementation manner, the stop sending module includes:
a first stop sending unit, a second stop sending unit, or a third stop sending unit, where
the first stop sending unit is configured to send the service stop indication to the UE by using a paging message;
the second stop sending unit is configured to add a predetermined quantity of empty data packets to a tail of the sent service, where the predetermined quantity of empty data packets are used as the service stop indication; and
the third stop sending unit is configured to send Media Access Control MAC control signaling of a predetermined format to the UE, where the MAC control signaling of the predetermined format is used as the service stop indication.

With reference to the fourth aspect, and the first to eighth possible implementation manners of the fourth aspect, in a ninth possible implementation manner, the apparatus further includes: a configuration obtaining module, where
the configuration obtaining module is configured to receive the configuration information of the service sent by a multi-cell/multicast coordination entity MCE.

With reference to the ninth possible implementation manner of the fourth aspect, in a tenth possible implementation manner, the apparatus further includes: a request sending module, where
the request sending module is configured to send an M2 setup request to the MCE; and
the configuration obtaining module is configured to receive an M2 setup response fed back by the MCE, where the M2 setup response carries the configuration information of the service.

With reference to the second possible implementation manner of the fourth aspect, in an eleventh possible implementation manner, when the configuration information of the service includes: the time frequency resource corresponding to the service in the MBSFN subframe; or the MBSFN subframe corresponding to the service, and the time frequency resource corresponding to the service in the MBSFN subframe,
the apparatus further includes: a capability receiving module, where
the capability receiving module is configured to receive a capability indication reported by the UE, where the capability indication denotes that the UE possesses a capability of receiving the service and another service simultaneously in the MBSFN subframe corresponding to the service; and
the service sending module is configured to send the service in the time frequency resource corresponding to the service in the MBSFN subframe configured in the configuration information of the service, and send the another service in a time frequency resource not corresponding to the service in the MBSFN subframe.

With reference to the third possible implementation manner of the fourth aspect, in a twelfth possible implementation manner, when the configuration information of the service includes: the time frequency resource corresponding to the service in the subframe; or the subframe corresponding to the service, and the time frequency resource corresponding to the service in the subframe,
the apparatus further includes: a capability receiving module, where
the capability receiving module is configured to receive a capability indication reported by the UE, where the capability indication denotes that the UE possesses a capability of receiving the service and another service simultaneously in the subframe corresponding to the service; and
the service sending module is configured to send the service in the time frequency resource corresponding to the service in the subframe, the time frequency being configured in the configuration information of the service, and send the another service in a time frequency resource not corresponding to the service in the subframe.

According to a fifth aspect, a service transmission apparatus is provided, which is applied to a terminal, where the apparatus includes:
a configuration receiving module, configured to receive configuration information of a service sent by a base station;
an arrival receiving module, configured to receive an arrival indication of the service sent by the base station; and
a service receiving module, configured to: after the arrival indication of the service is received, receive the service according to the configuration information of the service, where the service is sent by the base station according to the configuration information of the service.

In a first possible implementation manner of the fifth aspect, the configuration information of the service includes:
a non-multimedia broadcast multicast service single frequency network MBSFN area length and a modulation and coding scheme; or
a non-MBSFN area length, a modulation and coding scheme, and an MBSFN subframe configuration corresponding to the service; or
an MBSFN area identifier; or
a subframe configuration corresponding to the service and a modulation and coding scheme.

With reference to the first possible implementation manner of the fifth aspect, in a second possible implementation manner, the MBSFN subframe configuration corresponding to the service includes:
an MBSFN subframe corresponding to the service; or
a time frequency resource corresponding to the service in an MBSFN subframe; or
an MBSFN subframe corresponding to the service, and a time frequency resource corresponding to the service in the MBSFN subframe.

With reference to the first possible implementation manner of the fifth aspect, in a third possible implementation manner, the subframe configuration corresponding to the service includes:
a subframe corresponding to the service; or
a time frequency resource corresponding to the service in a subframe; or
a subframe corresponding to the service, and a time frequency resource corresponding to the service in the subframe.

With reference to any one of the fifth aspect, and the first to third possible implementation manners of the fifth aspect, in a fourth possible implementation manner, the configuration receiving module includes: a first configuration receiving unit or a second configuration receiving unit, where
the first configuration receiving unit is configured to receive the configuration information of the service that is sent by the base station by using a broadcast message; and
the second configuration receiving unit is configured to receive the configuration information of the service that is sent by the base station by using a paging message.

With reference to the fourth possible implementation manner of the fifth aspect, in a fifth possible implementation manner, the first configuration receiving unit is configured to receive the configuration information of the service that is sent by the base station by using a system information block SIB in broadcast information, where the SIB is any SIB.

With reference to the fifth aspect, and the first to fifth possible implementation manners of the fifth aspect, in a sixth possible implementation manner, the arrival receiving module includes: a first arrival receiving unit, a second arrival receiving unit, or a third arrival receiving unit, where
the first arrival receiving unit is configured to receive the arrival indication of the service that is sent by the base station by using a paging message;
the second arrival receiving unit is configured to receive configuration information, sent by the base station by using a broadcast message, of an MCCH change notification corresponding to the service; and listen to the MCCH change notification according to the configuration information of the MCCH change notification, where the MCCH change notification is used for sending the arrival indication of the service to the UE; and
the third arrival receiving unit is configured to receive the arrival indication of the service that is sent by the base station by using a paging message, and receive configuration information, sent by the base station by using a broadcast message, of an MCCH change notification corresponding to the service; and listen to the MCCH change notification according to the configuration information of the MCCH change notification, where the MCCH change notification is used for sending the arrival indication of the service to the UE.

With reference to the fifth aspect, and the first to sixth possible implementation manners of the fifth aspect, in a seventh possible implementation manner, the apparatus further includes: a stop receiving module and a service receiving module, where
the stop receiving module is configured to receive a service stop indication sent by the base station; and
the service receiving module is configured to: after the service stop indication is received, stop receiving the service.

With reference to the seventh possible implementation manner of the fifth aspect, in an eighth possible implementation manner, the stop receiving module includes:
a first stop receiving unit, a second stop receiving unit, or a third stop receiving unit, where
the first stop receiving unit is configured to receive the service stop indication that is sent by the base station to the UE by using a paging message;
the second stop receiving unit is configured to detect whether a predetermined quantity of empty data packets exist in the received service, where if a detection result is that the predetermined quantity of empty data packets exist, the predetermined quantity of empty data packets are used as the service stop indication; and
the third stop receiving unit is configured to receive Media Access Control MAC control signaling of a predetermined format sent by the base station, where the MAC control signaling of the predetermined format is used as the service stop indication.

With reference to the second possible implementation manner of the fifth aspect, in a ninth possible implementation manner, when the configuration information of the service includes: the time frequency resource corresponding to the service in the MBSFN subframe; or the MBSFN subframe corresponding to the service, and the time frequency resource corresponding to the service in the MBSFN subframe,
the apparatus further includes: a capability sending module, where
the capability sending module is configured to send a capability indication to the base station, where the capability indication denotes that the UE possesses a capability of receiving the service and another service simultaneously in the MBSFN subframe corresponding to the service; and
the service receiving module includes: a first receiving unit, a first detecting unit, and a second receiving unit, where
the first receiving unit is configured to receive the service in the time frequency resource corresponding to the service in the MBSFN subframe configured in the configuration information of the service;
the service detecting unit is configured to detect whether the another service exists in a time frequency resource not corresponding to the service in the MBSFN subframe; and
the second receiving unit is configured to: if a detection result is that the another service exists, receive the another service in the time frequency resource not corresponding to the service in the MBSFN subframe.

With reference to the third possible implementation manner of the fifth aspect, in a tenth possible implementation manner, when the configuration information of the service includes: the time frequency resource corresponding to the service in the subframe; or the subframe corresponding to the service, and the time frequency resource corresponding to the service in the subframe,
the apparatus further includes: a capability sending module, where
the capability sending module is configured to send a capability indication to the base station, where the capability indication denotes that the UE possesses a capability of receiving the service and another service simultaneously in the subframe corresponding to the service; and
the service receiving module includes: a third receiving unit, a third detecting unit, and a fourth receiving unit, where
the third receiving unit is configured to receive the service in the time frequency resource corresponding to the service in the subframe, the time frequency resource being configured in the configuration information of the service;
the third detecting unit is configured to detect whether the another service exists in a time frequency resource not corresponding to the service in the subframe; and
the fourth receiving unit is configured to: if a detection result is that the another service exists, receive the another service in the time frequency resource not corresponding to the service in the subframe.

According to a sixth aspect, a service transmission apparatus is provided, which is applied to a multi-cell/multicast coordination entity MCE, where the apparatus includes:
a configuration delivering module, configured to send configuration information of a service to a base station, so that the base station receives the configuration information of the service, sends the configuration information of the service to user equipment UE, sends an arrival indication of the service to the UE, and sends the service according to the configuration information of the service, so that after receiving the arrival indication of the service, the UE receives the service according to the configuration information of the service.

In a first possible implementation manner of the sixth aspect, the apparatus further includes:
a request receiving module, where
the request receiving module is configured to receive an M2 setup request sent by the base station; and
the configuration delivering module is configured to feed back an M2 setup response to the base station, where the M2 setup response carries the configuration information of the service.

With reference to the sixth aspect or the first possible implementation manner of the sixth aspect, in a second possible implementation manner, the configuration information of the service includes:
a non-multimedia broadcast multicast service single frequency network MBSFN area length and a modulation and coding scheme; or
a non-MBSFN area length, a modulation and coding scheme, and an MBSFN subframe configuration corresponding to the service; or
an MBSFN area identifier; or
a subframe configuration corresponding to the service and a modulation and coding scheme.

With reference to the second possible implementation manner of the sixth aspect, in a third possible implementation manner, the MBSFN subframe configuration corresponding to the service includes:
an MBSFN subframe corresponding to the service; or
a time frequency resource corresponding to the service in an MBSFN subframe; or
an MBSFN subframe corresponding to the service, and a time frequency resource corresponding to the service in the MBSFN subframe.

With reference to the second possible implementation manner of the sixth aspect, in a fourth possible implementation manner, the subframe configuration corresponding to the service includes:
a subframe corresponding to the service; or
a time frequency resource corresponding to the service in a subframe; or
a subframe corresponding to the service, and a time frequency resource corresponding to the service in the subframe.

According to a seventh aspect, a service transmission system is provided, including a base station and user equipment UE, where the base station and the UE are connected to each other by using a wireless network;
the base station includes the service transmission apparatus according to any one of the fourth aspect and the various possible implementation manners of the fourth aspect; and
the UE includes the service transmission apparatus according to any one of the fifth aspect and the various possible implementation manners of the fifth aspect.

According to an eighth aspect, a service transmission system is provided, including a multi-cell/multicast coordination entity MCE, a base station, and user equipment UE, where the MCE and the base station are connected by using a wired network, and the base station and the UE are connected to each other by using a wireless network;
the MCE includes the service transmission apparatus according to any one of the sixth aspect and the various possible implementation manners of the sixth aspect;
the base station includes the service transmission apparatus according to any one of the fourth aspect and the various possible implementation manners of the fourth aspect; and
the UE includes the service transmission apparatus according to any one of the fifth aspect and the various possible implementation manners of the fifth aspect.

According to a ninth aspect, a base station is provided, where the base station includes: a processor, a memory, and a transmitter, where
the processor is configured to control the transmitter to send configuration information of a service stored in the memory to user equipment UE;
the processor is further configured to control the transmitter to send an arrival indication of the service to the UE; and
the processor is further configured to send, according to the configuration information of the service sent by the transmitter, the service stored in the memory, so that after receiving the arrival indication of the service, the UE receives the service according to the configuration information of the service.

In a first possible implementation manner of the ninth aspect, the configuration information of the service includes:
a non-multimedia broadcast multicast service single frequency network MBSFN area length and a modulation and coding scheme; or
a non-MBSFN area length, a modulation and coding scheme, and an MBSFN subframe configuration corresponding to the service; or
an MBSFN area identifier; or
a subframe configuration corresponding to the service and a modulation and coding scheme.

With reference to the first possible implementation manner of the ninth aspect, in a second possible implementation manner, the MBSFN subframe configuration corresponding to the service includes:
an MBSFN subframe corresponding to the service; or
a time frequency resource corresponding to the service in an MBSFN subframe; or
an MBSFN subframe corresponding to the service, and a time frequency resource corresponding to the service in the MBSFN subframe.

With reference to the first possible implementation manner of the ninth aspect, in a third possible implementation manner, the subframe configuration corresponding to the service includes:
a subframe corresponding to the service; or
a time frequency resource corresponding to the service in a subframe; or
a subframe corresponding to the service, and a time frequency resource corresponding to the service in the subframe.

With reference to any one of the ninth aspect, and the first to third possible implementation manners of the ninth aspect, in a fourth possible implementation manner, the processor is configured to control the transmitter to send, by using a broadcast message, the configuration information of the service to the UE; or
the processor is configured to control the transmitter to send, by using a paging message, the configuration information of the service to the UE.

With reference to the fourth possible implementation manner of the ninth aspect, in a fifth possible implementation manner, the processor is configured to control the transmitter to send, by using a system information block SIB in the broadcast message, the configuration information of the service to the UE, where the SIB is any SIB.

With reference to the ninth aspect, and the first to fifth possible implementation manners of the ninth aspect, in a sixth possible implementation manner, the processor is configured to control the transmitter to send, by using a paging message, the arrival indication of the service to the UE; or the processor is configured to control the transmitter to send, by using a broadcast message, configuration information of an MCCH change notification corresponding to the service to the UE, where the MCCH change notification is used for sending the arrival indication of the service to the UE; or
the processor is configured to control the transmitter to send, by using a paging message, the arrival indication of the service to the UE, and send configuration information of an MCCH change notification corresponding to the service to the UE by using a broadcast message, where the MCCH change notification is used for sending the arrival indication of the service to the UE.

With reference to the ninth aspect, and the first to sixth possible implementation manners of the ninth aspect, in a seventh possible implementation manner, the processor is further configured to control the transmitter to send a service stop indication to the UE, so that after receiving the service stop indication, the UE stops receiving the service.

With reference to the seventh possible implementation manner of the ninth aspect, in an eighth possible implementation manner, the processor is configured to control the transmitter to send, by using a paging message, the service stop indication to the UE;
the processor is configured to add a predetermined quantity of empty data packets to a tail of the service sent by the transmitter, where the predetermined quantity of empty data packets are used as the service stop indication; or
the processor is configured to control the transmitter to send Media Access Control MAC control signaling of a predetermined format to the UE, where the MAC control signaling of the predetermined format is used as the service stop indication.

With reference to the ninth aspect, and the first to eighth possible implementation manners of the ninth aspect, in a ninth possible implementation manner, the base station further includes a receiver, where
the receiver is configured to receive the configuration information of the service sent by a multi-cell/multicast coordination entity MCE; and
the processor is configured to store, in the memory, the configuration information of the service received by the receiver.

With reference to the ninth possible implementation manner of the ninth aspect, in a tenth possible implementation manner, the processor is configured to control the transmitter to send an M2 setup request to the MCE; and
the receiver is configured to receive an M2 setup response fed back by the MCE, where the M2 setup response carries the configuration information of the service.

With reference to the second possible implementation manner of the ninth aspect, in an eleventh possible implementation manner, when the configuration information of the service includes: the time frequency resource corresponding to the service in the MBSFN subframe; or the MBSFN subframe corresponding to the service, and the time frequency resource corresponding to the service in the MBSFN subframe,
the apparatus further includes a receiver, where
the receiver is configured to receive a capability indication reported by the UE, where the capability indication denotes that the UE possesses a capability of receiving the service and another service simultaneously in the MBSFN subframe corresponding to the service; and
the processor is configured to control the transmitter to: send the service in the time frequency resource corresponding to the service in the MBSFN subframe configured in the configuration information of the service, and send the another service in a time frequency resource not corresponding to the service in the MBSFN subframe.

With reference to the third possible implementation manner of the ninth aspect, in a twelfth possible implementation manner, when the configuration information of the service includes: the time frequency resource corresponding to the service in the subframe; or the subframe corresponding to the service, and the time frequency resource corresponding to the service in the subframe,
the base station further includes a receiver, where
the receiver is configured to receive a capability indication reported by the UE, where the capability indication denotes that the UE possesses a capability of receiving the service and another service simultaneously in the subframe corresponding to the service; and
the processor is configured to control the transmitter to: send the service in the time frequency resource corresponding to the service in the subframe, the time frequency being configured in the configuration information of the service, and send the another service in a time frequency resource not corresponding to the service in the subframe.

According to a tenth aspect, a terminal is provided, where the terminal includes: a receiver, a processor, and a memory, where
the receiver is configured to receive configuration information of the service sent by a base station;
the receiver is configured to receive an arrival indication of the service sent by the base station; and
the processor is configured to: after the receiver receives the arrival indication of the service, control, according to the configuration information of the service stored in the memory, the receiver to receive the service, where the service is sent by the base station according to the configuration information of the service.

In a first possible implementation manner of the tenth aspect, the configuration information of the service includes:
a non-multimedia broadcast multicast service single frequency network MBSFN area length and a modulation and coding scheme; or
a non-MBSFN area length, a modulation and coding scheme, and an MBSFN subframe configuration corresponding to the service; or
an MBSFN area identifier; or
a subframe configuration corresponding to the service and a modulation and coding scheme.

With reference to the first possible implementation manner of the tenth aspect, in a second possible implementation manner, the MBSFN subframe configuration corresponding to the service includes:
an MBSFN subframe corresponding to the service; or
a time frequency resource corresponding to the service in an MBSFN subframe; or
an MBSFN subframe corresponding to the service, and a time frequency resource corresponding to the service in the MBSFN subframe.

With reference to the first possible implementation manner of the tenth aspect, in a third possible implementation manner, the subframe configuration corresponding to the service includes:
a subframe corresponding to the service; or
a time frequency resource corresponding to the service in a subframe; or
a subframe corresponding to the service, and a time frequency resource corresponding to the service in the subframe.

With reference to any one of the tenth aspect, and the first to third possible implementation manners of the tenth aspect, in a fourth possible implementation manner, the receiver is configured to receive the configuration information of the service that is sent by the base station by using a broadcast message; or
the receiver is configured to receive the configuration information of the service that is sent by the base station by using a paging message.

With reference to the fourth possible implementation manner of the tenth aspect, in a fifth possible implementation manner, the receiver is configured to receive the configuration information of the service that is sent by the base station by using a system information block SIB in broadcast information, where the SIB is any SIB.

With reference to the tenth aspect, and the first to fifth possible implementation manners of the tenth aspect, in a sixth possible implementation manner, the receiver is configured to receive the arrival indication of the service that is sent by the base station by using a paging message; or
the receiver is configured to receive configuration information, sent by the base station by using a broadcast message, of an MCCH change notification corresponding to the service; and listen to the MCCH change notification according to the configuration information of the MCCH change notification, where the MCCH change notification is used for sending the arrival indication of the service to the UE; or
the receiver is configured to receive the arrival indication of the service that is sent by the base station by using a paging message, and receive configuration information, sent by the base station by using a broadcast message, of an MCCH change notification corresponding to the service; and listen to the MCCH change notification according to the configuration information of the MCCH change notification, where the MCCH change notification is used for sending the arrival indication of the service to the UE.

With reference to the tenth aspect, and the first to sixth possible implementation manners of the tenth aspect, in a seventh possible implementation manner, the receiver is configured to receive a service stop indication sent by the base station; and
the processor is further configured to: after the receiver receives the service stop indication, control the receiver to stop receiving the service.

With reference to the seventh possible implementation manner of the tenth aspect, in an eighth possible implementation manner, the receiver is configured to receive the service stop indication that is sent by the base station to the UE by using a paging message; or
the processor is configured to detect whether a predetermined quantity of empty data packets exist in the service received by the receiver, where if a detection result is that the predetermined quantity of empty data packets exist, the predetermined quantity of empty data packets are used as the service stop indication; or
the receiver is configured to receive Media Access Control MAC control signaling of a predetermined format sent by the base station, where the MAC control signaling of the predetermined format is used as the service stop indication.

With reference to the second possible implementation manner of the tenth aspect, in a ninth possible implementation manner, when the configuration information of the service includes: the time frequency resource corresponding to the service in the MBSFN subframe; or the MBSFN subframe corresponding to the service, and the time frequency resource corresponding to the service in the MBSFN subframe,
the receiver is configured to send a capability indication to the base station, where the capability indication denotes that the UE possesses a capability of receiving the service and another service simultaneously in the MBSFN subframe corresponding to the service;
the receiver is configured to receive the service in the time frequency resource corresponding to the service in the MBSFN subframe configured in the configuration information of the service;
the processor is configured to detect whether the another service exists in a time frequency resource not corresponding to the service in the MBSFN subframe; and
the receiver is configured to: if a detection result of the processor is that the another service exists, receive the another service in the time frequency resource not corresponding to the service in the MBSFN subframe.

With reference to the third possible implementation manner of the tenth aspect, in a tenth possible implementation manner, when the configuration information of the service includes: the time frequency resource corresponding to the service in the subframe; or the subframe corresponding to the service, and the time frequency resource corresponding to the service in the subframe,
the receiver is configured to send a capability indication to the base station, where the capability indication denotes that the UE possesses a capability of receiving the service and another service simultaneously in the subframe corresponding to the service;
the receiver is configured to receive the service in the time frequency resource corresponding to the service in the subframe, the time frequency being configured in the configuration information of the service;
the processor is configured to detect whether the another service exists in a time frequency resource not corresponding to the service in the subframe; and
the receiver is configured to: if a detection result of the processor is that the another service exists, receive the another service in the time frequency resource not corresponding to the service in the subframe.

According to an eleventh aspect, a multi-cell/multicast coordination entity MCE is provided, where the MCE includes: a processor, a memory, and a transmitter, where
the processor is configured to control the transmitter to: send configuration information of a service stored in the memory to a base station, so that the base station receives the configuration information of the service, sends the configuration information of the service to user equipment UE, sends an arrival indication of the service to the UE, and sends the service according to the configuration information of the service, so that after receiving the arrival indication of the service, the UE receives the service according to the configuration information of the service.

In a first possible implementation manner of the eleventh aspect, the MCE further includes a receiver, where
the receiver is configured to receive an M2 setup request sent by the base station; and
the transmitter is configured to feed back an M2 setup response to the base station, where the M2 setup response carries the configuration information of the service.

With reference to the eleventh aspect or the first possible implementation manner of the eleventh aspect, in a second possible implementation manner, the configuration information of the service includes:
a non-multimedia broadcast multicast service single frequency network MBSFN area length and a modulation and coding scheme; or
a non-MBSFN area length, a modulation and coding scheme, and an MBSFN subframe configuration corresponding to the service; or
an MBSFN area identifier; or
a subframe configuration corresponding to the service and a modulation and coding scheme.

With reference to the second possible implementation manner of the eleventh aspect, in a third possible implementation manner, the MBSFN subframe configuration corresponding to the service includes:
an MBSFN subframe corresponding to the service; or
a time frequency resource corresponding to the service in an MBSFN subframe; or
an MBSFN subframe corresponding to the service, and a time frequency resource corresponding to the service in the MBSFN subframe.

With reference to the second possible implementation manner of the eleventh aspect, in a fourth possible implementation manner, the subframe configuration corresponding to the service includes:
a subframe corresponding to the service; or
a time frequency resource corresponding to the service in a subframe; or
a subframe corresponding to the service, and a time frequency resource corresponding to the service in the subframe.

According to a twelfth aspect, a service transmission system is provided, including a base station and user equipment UE, where the base station and the UE are connected to each other by using a wireless network;
the base station is the base station according to any one of the ninth aspect and the various possible implementation manners of the ninth aspect; and
the UE is the UE according to any one of the tenth aspect and the various possible implementation manners of the tenth aspect.

According to a thirteenth aspect, a service transmission system is provided, including a multi-cell/multicast coordination entity MCE, a base station, and user equipment UE, where the MCE and the base station are connected by using a wired network, and the base station and the UE are connected to each other by using a wireless network;
the MCE is the MCE according to any one of the eleventh aspect and the various possible implementation manners of the eleventh aspect;
the base station is the base station according to any one of the ninth aspect and the various possible implementation manners of the ninth aspect; and
the UE is the UE according to any one of the tenth aspect and the various possible implementation manners of the tenth aspect.

Beneficial effects of the technical solutions provided in the embodiments of the present invention are as follows:
A base station sends configuration information of a service to UE, and triggers, by using an arrival indication of the service, the UE to receive the service, so as to resolve the problem that a conventional MBMS cannot transmit an emergency service or a burst service, and achieve an effect that the UE may be triggered by the arrival indication of the service to receive the service, thereby satisfying a transmission requirement brought about by unpredictability of an emergency service or a burst service.

### BRIEF DESCRIPTION OF DRAWINGS

To describe the technical solutions in the embodiments of the present invention more clearly, the following briefly introduces the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic structural diagram of a wireless communications system involved in a service transmission method according to an embodiment of the present invention;
FIG. 2 is a method flowchart of a service transmission method according to an embodiment of the present invention;
FIG. 3 is a method flowchart of a service transmission method according to another embodiment of the present invention;
FIG. 4 is a method flowchart of a service transmission method according to still another embodiment of the present invention;
FIG. 5 is a method flowchart of a service transmission method according to still another embodiment of the present invention;
FIG. 6 is a method flowchart of a service transmission method according to still another embodiment of the present invention;
FIG. 7 is a method flowchart of a service transmission method according to still another embodiment of the present invention;
FIG. 8 is a method flowchart of a service transmission method according to still another embodiment of the present invention;
FIG. 9 is a structural block diagram of a service transmission system according to an embodiment of the present invention;
FIG. 10 is a structural block diagram of a service transmission system according to another embodiment of the present invention;
FIG. 11 is a structural block diagram of a service transmission system according to an embodiment of the present invention; and
FIG. 12 is a structural block diagram of a service transmission system according to another embodiment of the present invention.

### DESCRIPTION OF EMBODIMENTS

To make the objectives, technical solutions, and advantages of the present invention clearer, the following further describes the embodiments of the present invention in detail with reference to the accompanying drawings.

A "service" described herein mainly refers to a service whose triggering time is unpredictable, where the service includes but is not limited to: an emergency service and a burst service. The emergency service refers to a service brought about by an emergency event such as an unexpected earthquake, tsunami, or terror attack, and the burst service refers to a service such as video streaming with a variable rate or file transmission. Particularly, the emergency service is further characterized by sensitivity to time delay, area relevance, and high priority.

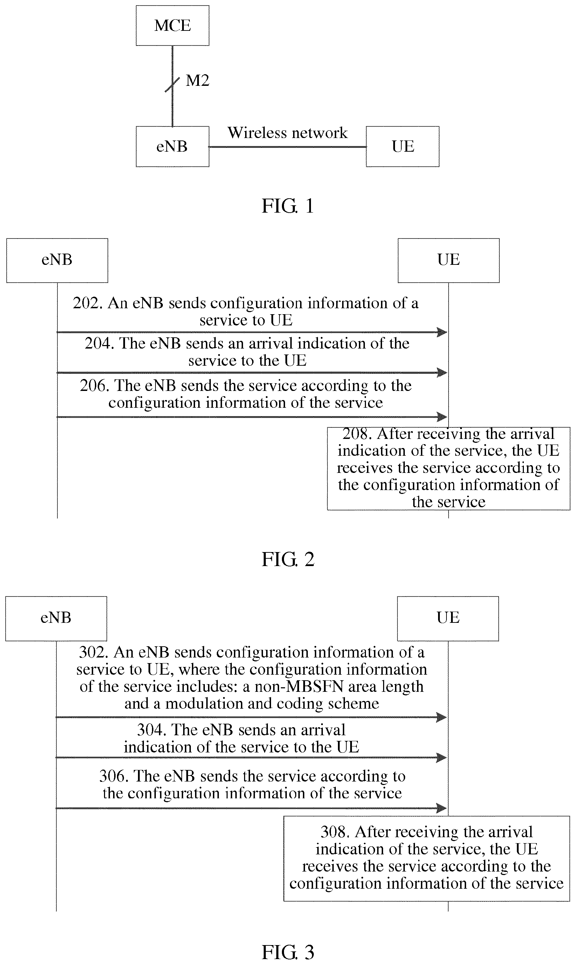

Referring to FIG. 1, FIG. 1 shows a schematic structural diagram of a wireless communications system involved in a service transmission method according to an embodiment of the present invention. An implementation environment is an LTE (Long Term Evolution, Long Term Evolution) wireless communications system, where the LTE wireless communications system includes an MCE (Multi-Cell/Multicast Coordination Entity, multi-cell/multicast coordination entity), an eNB (Evolved NodeB, evolved NodeB), and UE (User Equipment, user equipment).

The MCE communicates with the eNB by using an M2 (E-UTRAN internal control plane interface, E-UTRAN internal control plane interface); and the eNB communicates with the UE by using a wireless network.

Referring to FIG. 2, FIG. 2 shows a method flowchart of a service transmission method according to an embodiment of the present invention. In this embodiment, an example in which the service transmission method is applied between the eNB and the UE that are shown in FIG. 1 is mainly used for description. The service transmission method includes:
Step 202: The eNB sends configuration information of a service to the UE.

The configuration information of the service is used for indicating a transmission manner of the service, and the service includes an emergency service or a burst service.

Correspondingly, the UE receives the configuration information of the service sent by the eNB.

Step 204: The eNB sends an arrival indication of the service to the UE.

When the service needs to be sent, the eNB sends the arrival indication of the service to the UE.

Correspondingly, the UE receives the arrival indication of the service sent by the eNB.

Step 206: The eNB sends the service according to the configuration information of the service.

The eNB sends the service to the UE according to the configuration information of the service.

Step 208: After receiving the arrival indication of the service, the UE receives the service according to the configuration information of the service.

To sum up, in the service transmission method provided in this embodiment, a base station sends configuration information of the service to UE, and triggers, by using an arrival indication of the service, the UE to receive a service, so as to resolve a problem that a conventional MBMS cannot transmit an emergency service or a burst service, and achieve an effect that the UE may be triggered by using the arrival indication of the service to receive the service, thereby satisfying a transmission requirement brought about by unpredictability of an emergency service or a burst service.

Because at least four different implementation manners exist for configuration information of the service, four different implementation manners for the configuration information of the service are described in detail in four embodiments shown in FIG. 3 to FIG. 6.

Referring to FIG. 3, FIG. 3 shows a method flowchart of a service transmission method according to another embodiment of the present invention. In this embodiment, an example in which the service transmission method is applied between the eNB and the UE that are shown in FIG. 1 is used for description, and a first implementation manner for configuration information of the service is described in detail. The service transmission method includes:
Step 302: The eNB sends configuration information of a service to the UE, where the configuration information of the service includes: a non-MBSFN area length and a modulation and coding scheme.

A service in this embodiment is an emergency service or a burst service, and assuming that all MBSFN subframes are used for transmitting the emergency service or the burst service, in this case, the configuration information of the service that the eNB needs to provide to the UE includes two pieces of content: the non-MBSFN area length and the modulation and coding scheme.

The non-MBSFN area length refers that: in an MBSFN subframe, not all symbols are used for MBSFN transmission, and several symbols in the front of the MBSFN subframe are not used for MBSFN transmission; and a length of these several symbols, that is, a non-MBSFN area length needs to be indicated. That is, the non-MBSFN area length denotes a length of an area that is not used for transmitting an MBMS service and is in the MBSFN subframe; another area in the MBSFN subframe except the area identified by the non-MBSFN area length is an area used for transmitting the MBMS service, and the MBMS service in this case is an emergency service or a burst service. Correspondingly, an MBSFN area length denotes a length of an area that is used for transmitting the MBMS service and is in the MBSFN subframe.

The modulation and coding scheme refers to: a modulation and coding scheme of the MBMS service.

Correspondingly, the UE receives the configuration information of the service sent by the eNB. The eNB may send the configuration information of the service to the UE by using a broadcast message or a paging message.

Step 304: The eNB sends an arrival indication of the service to the UE.

When an emergency service or a burst service that needs to be sent exists, the eNB sends the arrival indication of the service to the UE.

Correspondingly, the UE receives the arrival indication of the service sent by the eNB. The eNB may send the arrival indication of the service to the UE by using a broadcast message and/or a paging message.

Step 306: The eNB sends the service according to the configuration information of the service.

The eNB sends the service to the UE in a transmission manner indicated by the configuration information of the service. In this embodiment, the eNB sends the emergency service or the burst service to the UE according to the MBSFN subframe and the modulation and coding scheme that are indicated by the configuration information of the service.

Step 308: After receiving the arrival indication of the service, the UE receives the service according to the configuration information of the service.

After receiving the arrival indication of the service, the UE receives the service in the transmission manner indicated by the configuration information of the service. In this embodiment, the UE receives the emergency service or the burst service according to the MBSFN subframe and the modulation and coding scheme that are indicated by the configuration information of the service.

To sum up, as a more preferable embodiment provided based on the embodiment shown in FIG. 2, on the basis of advantages of the embodiment shown in FIG. 2, in this embodiment, an MBMS subframe is further used to transmit an emergency service or a burst service; because an MBMS subframe itself is designed for a multicast or broadcast multimedia service, when an MBMS subframe is used to transmit an emergency service or a burst service, service data does not need to be divided into small data packets, and the service data may be transmitted by making full use of time frequency resources in multiple MBMS subframes. In comparison with a conventional technical solution in which an ETWS (Earthquake and Tsunami Warning System, earthquake and tsunami warning system) is restricted by a bearing capability of an SIB (System Information Block, system information block), and therefore an emergency service can only be transmitted in an SIB in a broadcast message after being divided into several small data packets, in the technical solution provided in this embodiment, a time delay during transmission of an emergency service or a burst service is very small, which can satisfy a requirement of an emergency service or a burst service with a large data volume on time delay performance.

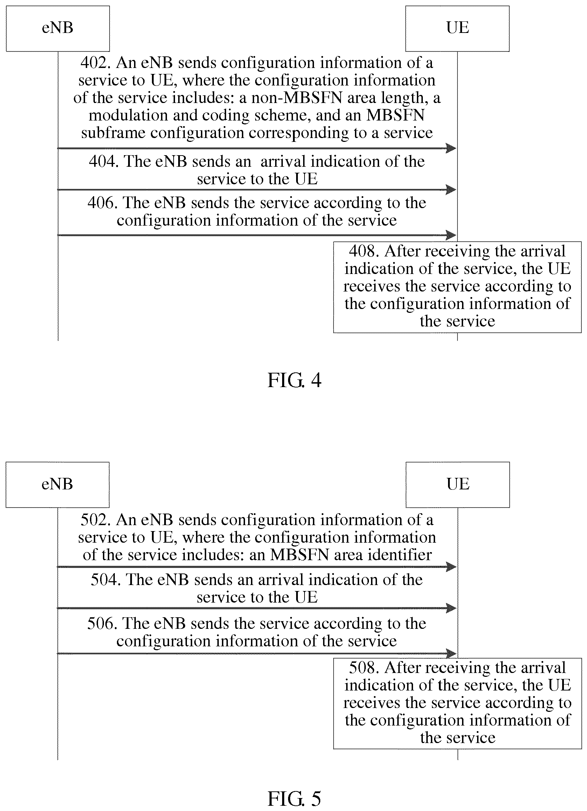

Referring to FIG. 4, FIG. 4 shows a method flowchart of a service transmission method according to still another embodiment of the present invention. In this embodiment, an example in which the service transmission method is applied between the eNB and the UE that are shown in FIG. 1 is used for description, and a second implementation manner for configuration information of the service is described in detail. The service transmission method includes:
Step 402: The eNB sends configuration information of a service to the UE, where the configuration information of the service includes: a non-MBSFN area length, a modulation and coding scheme, and an MBSFN subframe configuration corresponding to the service.

The service in this embodiment is an emergency service or a burst service, and assuming that only some subframes of all MBSFN subframes are used for transmitting the emergency service or the burst service, in this case, the configuration information of the service that the eNB needs to provide to the UE includes three pieces of content: the non-MBSFN area length, the modulation and coding scheme, and the MBSFN subframe configuration corresponding to the service.

For content of the non-MBSFN area length and the modulation and coding scheme, reference may be made to the content shown in step 302. A difference thereof lies in that: the newly added "MBSFN subframe configuration corresponding to the service " is used for indicating an MBSFN subframe resource in all the MBSFN subframes that is exclusively used for transmitting an emergency service or a burst service. Specifically, the MBSFN subframe configuration corresponding to the service includes any one of the following three configurations:
first: an MBSFN subframe corresponding to the service;
second: a time frequency resource corresponding to the service in an MBSFN subframe;
   and
third: an MBSFN subframe corresponding to the service, and a time frequency resource corresponding to the service in the MBSFN subframe.

In the first configuration, only some MBSFN subframes of all the MBSFN subframes are used for transmitting an emergency service or a burst service. However, if an MBSFN subframe is used for transmitting an emergency service or a burst service, all time frequency resources in the MBSFN subframe that are used for MBSFN transmission are used for transmitting the emergency service or the burst service.

In the second configuration, all MBSFN subframes are used for transmitting an emergency service or a burst service, but only some time frequency resources in each MBSFN subframe are used for transmitting the emergency service or the burst service. The some time frequency resources refer to: some symbols in a time domain and all subcarriers in a frequency domain in an MBSFN subframe; or some subcarriers in a frequency domain and all symbols in a time domain in an MBSFN subframe; or some symbols in a time domain and some subcarriers in a frequency domain in an MBSFN subframe.

In the third configuration, only some MBSFN subframes are used for transmitting an emergency service or a burst service, and moreover, if an MBSFN subframe is used for transmitting an emergency service or a burst service, only some time frequency resources in the MBSFN subframe are used for transmitting the emergency service or the burst service as well.

Correspondingly, the UE receives the configuration information of the service sent by the eNB. The eNB may send the configuration information of the service to the UE by using a broadcast message or a paging message.

Step 404: The eNB sends an arrival indication of the service to the UE.

When an emergency service or a burst service that needs to be sent exists, the eNB sends the arrival indication of the service to the UE.

Correspondingly, the UE receives the arrival indication of the service sent by the eNB. The eNB may send the arrival indication of the service to the UE by using a broadcast message and/or a paging message.

Step 406: The eNB sends the service according to the configuration information of the service.

The eNB sends the service to the UE in a transmission manner indicated by the configuration information of the service. In this embodiment, the eNB sends the emergency service or the burst service to the UE according to the MBSFN subframe and the modulation and coding scheme that are indicated by the configuration information of the service.

Step 408: After receiving the arrival indication of the service, the UE receives the service according to the configuration information of the service.

After receiving the arrival indication of the service, the UE receives the service in the transmission manner indicated by the configuration information of the service. In this embodiment, the UE receives the emergency service or the burst service according to the MBSFN subframe and the modulation and coding scheme that are indicated by the configuration information of the service.

To sum up, as a more preferable embodiment provided based on the embodiment shown in FIG. 2, on the basis of advantages of the embodiment shown in FIG. 2, in this embodiment, an MBMS subframe is further used to transmit an emergency service or a burst service; because an MBMS subframe itself is designed for a multicast or broadcast multimedia service, when an MBMS subframe is used to transmit an emergency service or a burst service, service data does not need to be divided into small data packets, and the service data may be transmitted by making full use of time frequency resources in multiple MBMS subframes. In comparison with a conventional technical solution in which an ETWS (Earthquake and Tsunami Warning System, earthquake and tsunami warning system) is restricted by a bearing capability of an SIB, and therefore an emergency service can only be transmitted in an SIB in a broadcast message after being divided into several small data packets, in the technical solution provided in this embodiment, a time delay during transmission of an emergency service or a burst service is very small, which can satisfy a requirement of an emergency service or a burst service with a large data volume on time delay performance.

Referring to FIG. 5, FIG. 5 shows a method flowchart of a service transmission method according to still another embodiment of the present invention. In this embodiment, an example in which the service transmission method is applied between the eNB and the UE that are shown in FIG. 1 is used for description, and a third implementation manner for configuration information of the service is described in detail. The service transmission method includes:
Step 502: The eNB sends configuration information of a service to the UE, where the configuration information of the service includes: an MBSFN area identifier.

A service in this embodiment is an emergency service or a burst service, and assuming that all MBSFN subframes in an MBSFN area are used for transmitting the emergency service or the burst service, in this case, the configuration information of the service that the eNB needs to provide to the UE may include only one piece of content: the MBSFN area identifier.

Each MBSFN area corresponds to one MBSFN area identifier, and each MBSFN area identifier has corresponding configuration information in SIB13 in a broadcast message, where the configuration information includes: a non-MBSFN area length and a modulation and coding scheme.

Correspondingly, the UE receives the configuration information of the service sent by the eNB. The eNB may send the configuration information of the service to the UE by using a broadcast message or a paging message. After the UE receives the MBSFN area identifier, the UE obtains, from broadcast information according to the MBSFN area identifier, the non-MBSFN area length and the modulation and coding scheme that correspond to the MBSFN area identifier.

Step 504: The eNB sends an arrival indication of the service to the UE.

When an emergency service or a burst service that needs to be sent exists, the eNB sends the arrival indication of the service to the UE.

Correspondingly, the UE receives the arrival indication of the service sent by the eNB. The eNB may send the arrival indication of the service to the UE by using a broadcast message and/or a paging message.

Step 506: The eNB sends the service according to the configuration information of the service.

The eNB sends the service to the UE in a transmission manner indicated by the configuration information of the service. In this embodiment, the eNB sends the emergency service or the burst service to the UE according to the MBSFN subframe resource and the modulation and coding scheme that are indicated by the configuration information of the service.

Step 508: After receiving the arrival indication of the service, the UE receives the service according to the configuration information of the service.

After receiving the arrival indication of the service, the UE receives the service in the transmission manner indicated by the configuration information of the service. In this embodiment, the UE receives the emergency service or the burst service according to the MBSFN subframe resource and the modulation and coding scheme that are indicated by the configuration information of the service.

To sum up, as a more preferable embodiment provided based on the embodiment shown in FIG. 2, on the basis of advantages of the embodiment shown in FIG. 2, in this embodiment, an MBMS subframe is further used to transmit an emergency service or a burst service; because an MBMS subframe itself is designed for a multicast or broadcast multimedia service, when an MBMS subframe is used to transmit an emergency service or a burst service, service data does not need to be divided into small data packets, and the service data may be transmitted by making full use of time frequency resources in multiple MBMS subframes. In comparison with a conventional technical solution in which an ETWS (Earthquake and Tsunami Warning System, earthquake and tsunami warning system) is restricted by a bearing capability of an SIB, and therefore an emergency service can only be transmitted in an SIB in a broadcast message after being divided into several small data packets, in the technical solution provided in this embodiment, a time delay during transmission of an emergency service or a burst service is very small, which can satisfy a requirement of an emergency service or a burst service with a large data volume on time delay performance.

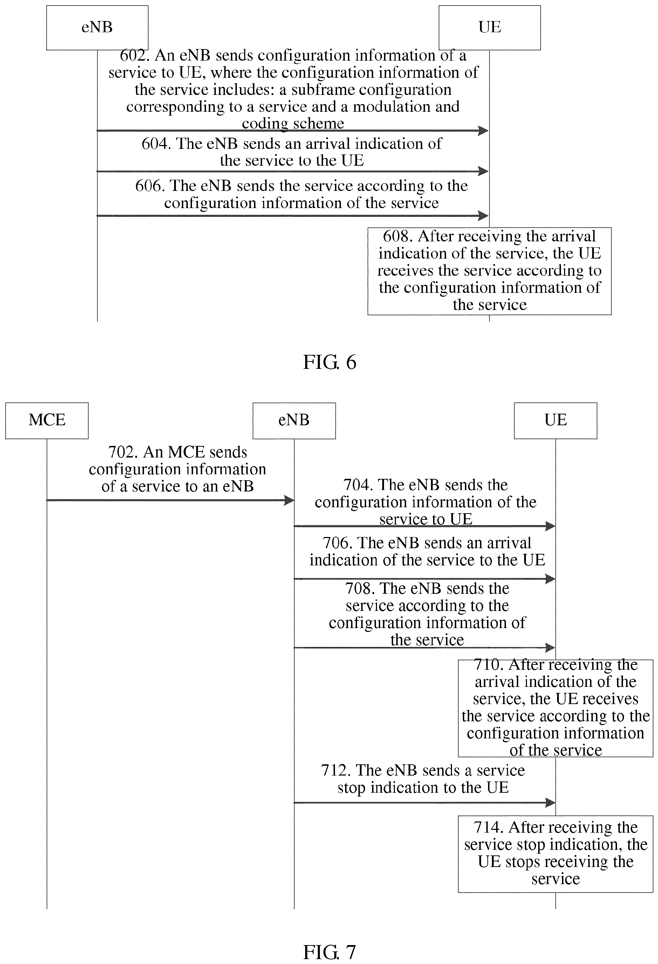

Referring to FIG. 6, FIG.6 shows a method flowchart of a service transmission method according to still another embodiment of the present invention. In this embodiment, an example in which the service transmission method is applied between the eNB and the UE that are shown in FIG. 1 is used for description, and a fourth implementation manner for configuration information of the service is described in detail. The service transmission method includes:
Step 602: The eNB sends configuration information of a service to the UE, where the configuration information of the service includes: a subframe configuration corresponding to a service and a modulation and coding scheme.

The service in this embodiment is an emergency service or a burst service, and different from the embodiment shown in FIG. 4, in this embodiment, an emergency service or a burst service is transmitted by using a subframe, where the subframe includes but is not limited to an MBSFN subframe, and may be another subframe that can transmit an emergency service and a burst service. In this case, the configuration information of the service that the eNB needs to provide to the UE includes two pieces of content: the subframe configuration corresponding to the service and the modulation and coding scheme.

The subframe configuration corresponding to the service is used for indicating a subframe resource in all the subframes that is exclusively used for transmitting an emergency service or a burst service. Specifically, the subframe configuration corresponding to the service includes any one of the following three configurations:
first: a subframe corresponding to the service;
second: a time frequency resource corresponding to the service in a subframe; and
third: a subframe corresponding to the service, and a time frequency resource corresponding to the service in the subframe.

In the first configuration, only some subframes of all subframes are used for transmitting an emergency service or a burst service. However, if a subframe is used for transmitting an emergency service or a burst service, all time frequency resources in the subframe that are used for service transmission are used for transmitting the emergency service or the burst service.

In the second configuration, all subframes are used for transmitting an emergency service or a burst service, but only some time frequency resources in each subframe are used for transmitting the emergency service or the burst service. The some time frequency resources refer to: some symbols in a time domain and all subcarriers in a frequency domain in a subframe; or some subcarriers in a frequency domain and all symbols in a time domain in a subframe; or some symbols in a time domain and some subcarriers in a frequency domain in a subframe.

In the third configuration, only some subframes are used for transmitting an emergency service or a burst service, and moreover, if a subframe is used for transmitting an emergency service or a burst service, only some time frequency resources in the subframe are used for transmitting the emergency service or the burst service as well.

The modulation and coding scheme is a modulation and coding scheme of the subframe.

Correspondingly, the UE receives the configuration information of the service sent by the eNB. The eNB may send the configuration information of the service to the UE by using a broadcast message or a paging message.

Step 604: The eNB sends an arrival indication of the service to the UE.

When an emergency service or a burst service that needs to be sent exists, the eNB sends the arrival indication of the service to the UE.

Correspondingly, the UE receives the arrival indication of the service sent by the eNB. The eNB may send the arrival indication of the service to the UE by using a broadcast message and/or a paging message.

Step 606: The eNB sends the service according to the configuration information of the service.

The eNB sends the service to the UE in a transmission manner indicated by the configuration information of the service. In this embodiment, the eNB sends the emergency service or the burst service to the UE according to the subframe resource and the modulation and coding scheme that are indicated by the configuration information of the service.

Step 608: After receiving the arrival indication of the service, the UE receives the service according to the configuration information of the service.

After receiving the arrival indication of the service, the UE receives the service in the transmission manner indicated by the configuration information of the service. In this embodiment, the UE receives the emergency service or the burst service according to the subframe resource and the modulation and coding scheme that are indicated by the configuration information of the service.

To sum up, as a more preferable embodiment provided based on the embodiment shown in FIG. 2, on the basis of advantages of the embodiment shown in FIG. 2, in this embodiment, a subframe is further used to transmit an emergency service or a burst service; because a subframe itself is designed for transmitting service data, when a subframe is used to transmit an emergency service or a burst service, service data does not need to be divided into small data packets, and the service data may be transmitted by making full use of time frequency resources in multiple subframes. In comparison with a conventional technical solution in which an ETWS (Earthquake and Tsunami Warning System, earthquake and tsunami warning system) is restricted by a bearing capability of an SIB, and therefore an emergency service can only be transmitted in an SIB in a broadcast message after being divided into several small data packets, in the technical solution provided in this embodiment, a time delay during transmission of an emergency service or a burst service is very small, which can satisfy a requirement of an emergency service or a burst service with a large data volume on time delay performance.

The configuration information of the service that is sent by eNB to the UE may be delivered in advance by an MCE to the eNB, and for a specific process, reference may be made to the following embodiment:
Referring to FIG. 7, FIG. 7 shows a method flowchart of a service transmission method according to still another embodiment of the present invention. In this embodiment, an example in which the service transmission method is applied to the wireless communications system that is shown in FIG. 1 is used for description. The service transmission method includes:
   Step 702: An MCE sends configuration information of a service to an eNB.

The MCE sends the configuration information of the service to the eNB in advance.

Specifically, this process may be completed in an M2 session setup process between the eNB and the MCE. Specifically, the eNB first sends an M2 setup request to the MCE, and then, the MCE feeds back an M2 setup response to the eNB, where the M2 setup response carries the configuration information of the service. The configuration information of the service is used for indicating a transmission manner of the service, and the service includes an emergency service or a burst service.

It should be noted that, it can be known according to the embodiments shown in FIG. 3 to FIG. 6 that, the configuration information of the service may be of any of four types, and therefore the configuration information of the service sent by the MCE may also be of any of the four types. That is, the configuration information of the service includes:
a non-MBSFN area length and a modulation and coding scheme; or
a non-MBSFN area length, a modulation and coding scheme, and an MBSFN subframe configuration corresponding to the service; or
an MBSFN area identifier; or
a subframe configuration corresponding to the service and a modulation and coding scheme.

Correspondingly, the eNB receives the configuration information of the service sent by the MCE.

Step 704: The eNB sends configuration information of the service to UE.

This step may be implemented by using either of the following two substeps:
1) The eNB sends the configuration information of the service to the UE by using a broadcast message.
   That is, the eNB sends the configuration information of the service to the UE by using an SIB in the broadcast message, where the SIB is any one or more SIBs. For example, the SIB may be any one of SIB 13, another SIB except SIB 13, and a newly added SIB.
2) The eNB sends the configuration information of the service to the UE by using a paging message.

Correspondingly, the UE receives the configuration information of the service sent by the eNB, which may also be implemented by using either of the following two substeps that correspond to those on the eNB side:
1) The UE receives the configuration information of the service that is sent by the eNB by using the broadcast message.
   That is, the UE receives the configuration information of the service that is sent by the eNB by using a system information block SIB in broadcast information, where the SIB is any one or more SIBs. For example, the SIB may be any one of SIB 13, another SIB except SIB 13, and a newly added SIB.
2) The UE receives the configuration information of the service that is sent by the eNB by using the paging message.

Step 706: The eNB sends an arrival indication of the service to the UE.

When the service needs to be sent, the eNB sends the arrival indication of the service to the UE. This step may be implemented by using any one of the following three substeps:
1) The eNB sends the arrival indication of the service to the UE by using a paging message.
2) The eNB sends configuration information of an MCCH change notification corresponding to the service to the UE by using a broadcast message, where the MCCH change notification is used for sending the arrival indication of the service to the UE.
3) The eNB sends the arrival indication of the service to the UE by using a paging message, and sends configuration information of an MCCH change notification corresponding to the service to the UE by using a broadcast message, where the MCCH change notification is used for sending the arrival indication of the service to the UE. In this manner, because a time at which the paging message arrives at the UE and a time at which the MCCH change notification arrives at the UE are different, the UE may be triggered as soon as possible to begin to receive the emergency service or the burst service.

Correspondingly, the UE receives the arrival indication of the service sent by the eNB, which may also be implemented by using one of the following three substeps that correspond to those on the eNB side:
1) The UE receives the arrival indication of the service that is sent by the eNB by using the paging message.
2) The UE receives the configuration information, sent by the eNB by using the broadcast message, of the MCCH change notification corresponding to the service; and listens to the MCCH change notification according to the configuration information of the MCCH change notification, where the MCCH change notification is used for sending the arrival indication of the service to the UE.
3) The UE receives the arrival indication of the service that is sent by the eNB by using the paging message, and the UE receives the configuration information, sent by the eNB by using the broadcast message, of the MCCH change notification corresponding to the service; and listens to the MCCH change notification according to the configuration information of the MCCH change notification, where the MCCH change notification is used for sending the arrival indication of the service to the UE. In this manner, because a time at which the paging message arrives at the UE and a time at which the MCCH change notification arrives at the UE are different, after receiving the arrival indication of the service that is sent in any manner, the UE may immediately begin to receive the emergency service or the burst service.

Step 708: The eNB sends the service according to the configuration information of the service.

The eNB sends the service to the UE in the transmission manner indicated by the configuration information of the service.

Step 710: After receiving the arrival indication of the service, the UE receives the service according to the configuration information of the service.

After receiving the arrival indication of the service, the UE receives the service in the transmission manner indicated by the configuration information of the service.

Step 712: The eNB sends a service stop indication to the UE.

After the service sending is completed, the eNB sends the service stop indication to the UE. This step may be implemented by using any one of the following three substeps:
1) The eNB sends the service stop indication to the UE by using a paging message.
2) The eNB adds a predetermined quantity of empty data packets to a tail of the sent service, where the predetermined quantity of empty data packets are used as the service stop indication.
3) The eNB sends MAC (Media access control, Media Access Control) control signaling of a predetermined format to the UE, where the MAC control signaling of the predetermined format is used as the service stop indication.

Correspondingly, the UE receives the service stop indication sent by the eNB. This step may be implemented by using one of the following three substeps that correspond to those on the eNB side:
1) The UE receives the service stop indication that is sent by the eNB to the UE by using the paging message.
2) The UE detects whether a predetermined quantity of empty data packets exist in the received service, where if a detection result is that the predetermined quantity of empty data packets exist, the predetermined quantity of empty data packets are used as the service stop indication.
3) The UE receives the MAC control signaling of the predetermined format that is sent by the eNB, where the MAC control signaling of the predetermined format is used as the service stop indication.

Step 714: After receiving the service stop indication, the UE stops receiving the service.

To sum up, in the service transmission method provided in this embodiment, a base station sends configuration information of the service to UE, and triggers, by using an arrival indication of the service, the UE to receive a service, so as to resolve a problem that a conventional MBMS cannot transmit an emergency service or a burst service, and achieve an effect that the UE may be triggered by using the arrival indication of the service to receive the service, thereby satisfying a transmission requirement brought about by unpredictability of an emergency service or a burst service.

It should be additionally noted that, there are four possible implementation manners for the configuration information of the service, there are two possible implementation manners for step 704, there are three possible implementation manners for step 706, and there are three possible implementation manners for step 712, and therefore there may be specifically 4*2*3*3=72 different implementation manners for the foregoing embodiment. Combination of different implementation manners of the foregoing parts into different specific embodiments can be easily figured out by a person skilled in the art, and is not described herein again due to a limitation on article length.

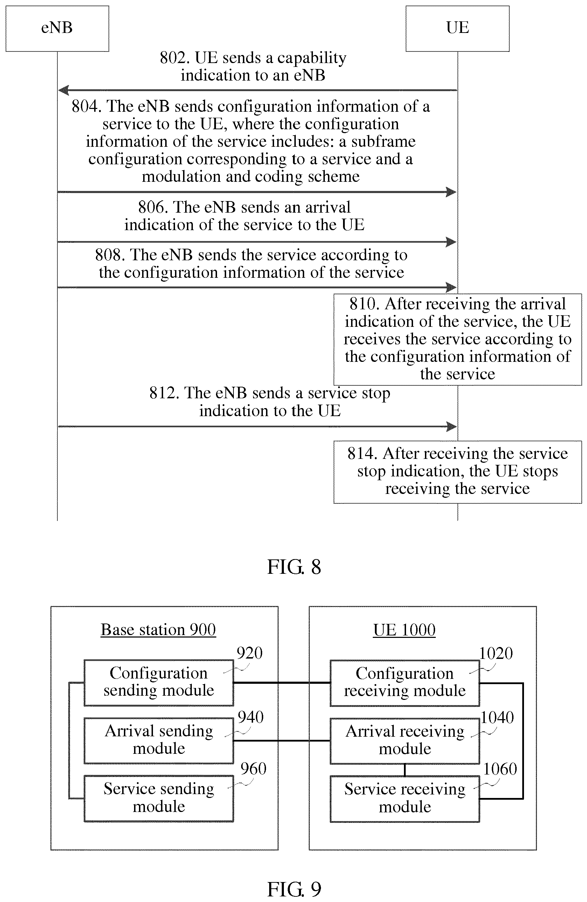

It can be known according to the foregoing description that, in some embodiments, only some time frequency resources in a subframe are used for transmitting an emergency service or a burst service. To improve transmission and utilization efficiency of subframe resources, refer to the following embodiment:
Referring to FIG. 8, FIG. 8 shows a method flowchart of a service transmission method according to still another embodiment of the present invention. In this embodiment, an example in which the service transmission method is applied between the eNB and the UE that are shown in FIG. 1 is used for description. The service transmission method includes:
   Step 802: The UE sends a capability indication to the eNB.

The UE sends the capability indication to the eNB, where the capability indication denotes that the UE possesses a capability of receiving the service and another service simultaneously in the subframe corresponding to the service, and the service is an emergency service or a burst service; and the another service refers to a paging message, a broadcast message, or a unicast service. Specifically, the UE may report the capability indication to the eNB in a process of accessing a wireless network.

Correspondingly, the eNB receives the capability indication sent by the UE.

Step 804: The eNB sends configuration information of the service to the UE.

Correspondingly, the UE receives the configuration information of the service sent by the eNB. However, in this embodiment, only some time frequency resources in a subframe are used for transmitting an emergency service or a burst service, and therefore the configuration information of the service may be of either of the following two types:
first type: a non-MBSFN area length, a modulation and coding scheme, and an MBSFN subframe configuration corresponding to the service, where
the MBSFN subframe configuration corresponding to the service includes: a time frequency resource corresponding to the service in an MBSFN subframe; or an MBSFN subframe corresponding to the service, and a time frequency resource corresponding to the service in the MBSFN subframe; and
second type: a subframe configuration corresponding to the service and a modulation and coding scheme, where
the subframe configuration corresponding to the service includes: a time frequency resource corresponding to the service in a subframe; or a subframe corresponding to the service, and a time frequency resource corresponding to the service in the subframe.

Correspondingly, the UE receives the configuration information of the service sent by the eNB.

Step 806: The eNB sends an arrival indication of the service to the UE.

When an emergency service or a burst service that needs to be sent exists, the eNB sends the arrival indication of the service to the UE.

Correspondingly, the UE receives the arrival indication of the service sent by the eNB.

Step 808: The eNB sends the service according to the configuration information of the service.

If in step 804, the eNB sends the configuration information of the service of the first type, the eNB sends the service in the time frequency resource corresponding to the service in the MBSFN subframe configured in the configuration information of the service, and sends another service in a time frequency resource not corresponding to the service in the MBSFN subframe.

If in step 804, the eNB sends the configuration information of the service of the second type, the eNB sends the service in the time frequency resource corresponding to the service in the subframe, the time frequency being configured in the configuration information of the service, and sends another service in a time frequency resource not corresponding to the service in the subframe.

The another service may refer to a paging message, a broadcast message, or a unicast service.

Step 810: After receiving the arrival indication of the service, the UE receives the service according to the configuration information of the service.

If in step 804, the eNB sends the configuration information of the service of the first type, the UE receives the service in the time frequency resource corresponding to the service in the MBSFN subframe configured in the configuration information of the service, and detects whether another service exists in a time frequency resource not corresponding to the service in the MBSFN subframe; and if a detection result is that the another service exists, receives the another service in the time frequency resource not corresponding to the service in the MBSFN subframe.

If in step 804, the eNB sends the configuration information of the service of the second type, the UE receives the service in the time frequency resource corresponding to the service in the subframe, the time frequency being configured in the configuration information of the service, and detects whether another service exists in a time frequency resource not corresponding to the service in the subframe; and if a detection result is that the another service exists, receives the another service in the time frequency resource not corresponding to the service in the subframe.

The another service may refer to a paging message, a broadcast message, or a unicast service.

Step 812: The eNB sends a service stop indication to the UE.

After the service sending is completed, the eNB sends the service stop indication to the UE.

Correspondingly, the UE receives the service stop indication sent by the eNB.

Step 814: After receiving the service stop indication, the UE stops receiving the service.

To sum up, in the service transmission method provided in this embodiment, on the premise that UE possesses a corresponding capability, an eNB not only transmits an emergency service or a burst service by using some time frequency resources in a subframe or an MBSFN subframe, but also schedules an area not corresponding to the emergency service or the burst service in the subframe or the MBSFN subframe for sending another service, where the another service may be a paging message, a broadcast message, a unicast service, or the like, so that in the subframe or the MBSFN subframe, not only is the emergency service or the burst service transmitted, but also the another service can be transmitted, thereby improving transmission and utilization efficiency of subframe resources. When an emergency event such as an earthquake or a tsunami occurs, in a scenario in which available communications resources may be greatly reduced due to device damage, this embodiment can be of relatively great practical use.

Apparatus embodiments in the present invention are described in the following, and for parts not described in detail in the apparatus embodiments, reference may be made to relevant details in the corresponding method embodiments in the above.

Referring to FIG. 9, FIG. 9 shows a schematic structural diagram of a service transmission system according to an embodiment of the present invention. The service transmission system includes a base station 900 and UE 1000 (where the UE 1000 is optional in structural composition of the system), where the base station 900 and the UE 1000 are connected to each other by using a wireless network. Specifically:
For the base station 900, the base station 900 includes a service transmission apparatus implemented by using software or hardware or a combination thereof, and the service transmission apparatus includes: a configuration sending module 920, an arrival sending module 940, and a service sending module 960.

The configuration sending module 920 is configured to send configuration information of a service to user equipment UE;
the arrival sending module 940 is configured to send an arrival indication of the service to the UE; and
the service sending module 960 is configured to send the service according to the configuration information of the service, so that after receiving the arrival indication of the service, the UE receives the service according to the configuration information of the service.

For the UE 1000, the UE 1000 includes a service transmission apparatus implemented by using software or hardware or a combination thereof, and the service transmission apparatus includes: a configuration receiving module 1020, an arrival receiving module 1040, and a service receiving module 1060.

The configuration receiving module 1020 is configured to receive configuration information of the service sent by a base station;
the arrival receiving module 1040 is configured to receive an arrival indication of the service sent by the base station; and
the service receiving module 1060 is configured to: after the arrival indication of the service is received, receive the service according to the configuration information of the service, where the service is sent by the base station according to the configuration information of the service.

To sum up, in the service transmission system provided in this embodiment, a base station sends configuration information of the service to UE, and triggers, by using an arrival indication of the service, the UE to receive a service, so as to resolve a problem that a conventional MBMS cannot transmit an emergency service or a burst service, and achieve an effect that the UE may be triggered by using the arrival indication of the service to receive the service, thereby satisfying a transmission requirement brought about by unpredictability of an emergency service or a burst service.

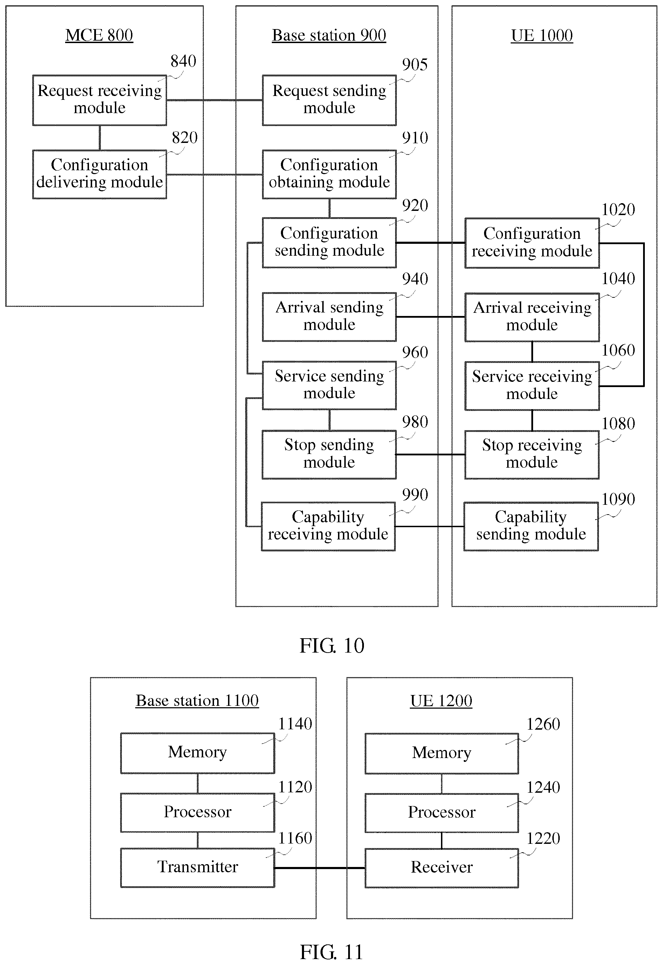

Referring to FIG. 10, FIG. 10 shows a schematic structural diagram of a service transmission system according to another embodiment of the present invention. The service transmission system includes an MCE 800, a base station 900 and UE 1000 (where the UE 1000 is optional in structural composition of the system), where the MCE 800 is connected to the base station 900 by using a wired network (such as an optic fiber), and the base station 900 and the UE 1000 are connected to each other by using a wireless network. Specifically:
For the MCE 800, the MCE 800 includes a service transmission apparatus implemented by using software or hardware or a combination thereof, and the service transmission apparatus includes: a configuration delivering module 820.

The configuration delivering module 820 is configured to send configuration information of the service to the base station 900, so that the base station 900 receives the configuration information of the service, sends the configuration information of the service to the user equipment UE 1000, sends an arrival indication of the service to the UE 1000, and sends the service according to the configuration information of the service, so that after receiving the arrival indication of the service, the UE 1000 receives the service according to the configuration information of the service.

Preferably, the service transmission apparatus further includes: a request receiving module 840.

The request receiving module 840 is configured to receive an M2 setup request sent by the base station; and
the configuration delivering module 820 is configured to: after the request receiving module 840 receives the M2 setup request, feed back an M2 setup response to the base station, where the M2 setup response carries the configuration information of the service.

The configuration information of the service is preferably of any of the following four types:
1) a non-multimedia broadcast multicast service single frequency network MBSFN area length and a modulation and coding scheme;
2) a non-MBSFN area length, a modulation and coding scheme, and an MBSFN subframe configuration corresponding to the service;
3) an MBSFN area identifier; and
4) a subframe configuration corresponding to the service and a modulation and coding scheme.

If the configuration information of the service is of the second type, the MBSFN subframe configuration corresponding to the service includes:
an MBSFN subframe corresponding to the service; or
a time frequency resource corresponding to the service in an MBSFN subframe; or
an MBSFN subframe corresponding to the service, and a time frequency resource corresponding to the service in the MBSFN subframe.

If the configuration information of the service is of the fourth type, the subframe configuration corresponding to the service includes:
a subframe corresponding to the service; or
a time frequency resource corresponding to the service in a subframe; or
a subframe corresponding to the service, and a time frequency resource corresponding to the service in the subframe.

For the base station 900, the base station 900 includes a service transmission apparatus implemented by using software or hardware or a combination thereof, and the service transmission apparatus includes: a configuration sending module 920, an arrival sending module 940, a service sending module 960, and a stop sending module 980.

The configuration sending module 920 is configured to send configuration information of a service to user equipment UE;
the arrival sending module 940 is configured to send an arrival indication of the service to the UE; and
the service sending module 960 is configured to send the service according to the configuration information of the service, so that after receiving the arrival indication of the service, the UE receives the service according to the configuration information of the service.

The stop sending module 980 is configured to send a service stop indication to the UE, so that after receiving the service stop indication, the UE stops receiving the service.

Preferably, the configuration sending module 920 includes: a first configuration sending unit or a second configuration sending unit, where
the first configuration sending unit is configured to send the configuration information of the service to the UE by using a broadcast message; and
the second configuration sending unit is configured to send the configuration information of the service to the UE by using a paging message.

Preferably, the first configuration sending unit is configured to send the configuration information of the service to the UE by using a system information block SIB in the broadcast message, where the SIB is any SIB.

Preferably, the arrival sending module 940 includes: a first arrival sending unit, a second arrival sending unit, or a third arrival sending unit, where
the first arrival sending unit is configured to send the arrival indication of the service to the UE by using a paging message;
the second arrival sending unit is configured to send configuration information of an MCCH change notification corresponding to the service to the UE by using a broadcast message, where the MCCH change notification is used for sending the arrival indication of the service to the UE; and
the third arrival sending unit is configured to send the arrival indication of the service to the UE by using a paging message, and send configuration information of an MCCH change notification corresponding to the service to the UE by using a broadcast message, where the MCCH change notification is used for sending the arrival indication of the service to the UE.

Preferably, the stop sending module 980 includes: a first stop sending unit, a second stop sending unit, or a third stop sending unit, where
the first stop sending unit is configured to send the service stop indication to the UE by using a paging message;
the second stop sending unit is configured to add a predetermined quantity of empty data packets to a tail of the sent service, where the predetermined quantity of empty data packets are used as the service stop indication; and
the third stop sending unit is configured to send Media Access Control MAC control signaling of a predetermined format to the UE, where the MAC control signaling of the predetermined format is used as the service stop indication.

More preferably, the base station 900 further includes: a configuration obtaining module 910, where
the configuration obtaining module 910 is configured to receive the configuration information of the service sent by a multi-cell/multicast coordination entity MCE 800.

More preferably, the base station 900 further includes: a request sending module 905, where
the request sending module 905 is configured to send an M2 setup request to the MCE;
   and
the configuration obtaining module 910 is configured to receive an M2 setup response fed back by the MCE, where the M2 setup response carries the configuration information of the service.

More preferably, when the configuration information of the service includes: the time frequency resource corresponding to the service in the MBSFN subframe; or the MBSFN subframe corresponding to the service, and the time frequency resource corresponding to the service in the MBSFN subframe,
the base station 920 further includes: a capability receiving module 990, where
the capability receiving module 990 is configured to receive a capability indication reported by the UE, where the capability indication denotes that the UE possesses a capability of receiving the service and another service simultaneously in the MBSFN subframe corresponding to the service; and
the service sending module 960 is configured to send the service in the time frequency resource corresponding to the service in the MBSFN subframe configured in the configuration information of the service, and send the another service in a time frequency resource not corresponding to the service in the MBSFN subframe.

Likewise, when the configuration information of the service includes: the time frequency resource corresponding to the service in the subframe; or the subframe corresponding to the service, and the time frequency resource corresponding to the service in the subframe,
the base station 920 further includes: a capability receiving module 990, where
the capability receiving module 990 is configured to receive a capability indication reported by the UE, where the capability indication denotes that the UE possesses a capability of receiving the service and another service simultaneously in the subframe corresponding to the service; and
the service sending module 960 is configured to send the service in the time frequency resource corresponding to the service in the subframe, the time frequency being configured in the configuration information of the service, and send the another service in a time frequency resource not corresponding to the service in the subframe.

For the UE 1000, the UE 1000 includes a service transmission apparatus implemented by using software or hardware or a combination thereof, and the service transmission apparatus includes: a configuration receiving module 1020, an arrival receiving module 1040, a service receiving module 1060 and a stop receiving module 1080.

The configuration receiving module 1020 is configured to receive configuration information of a service sent by a base station;
the arrival receiving module 1040 is configured to receive an arrival indication of the service sent by the base station; and
the service receiving module 1060 is configured to: after the arrival indication of the service is received, receive the service according to the configuration information of the service, where the service is sent by the base station according to the configuration information of the service.

The stop receiving module 1080 is configured to receive a service stop indication sent by the base station; and
the service receiving module 1060 is configured to: after the service stop indication is received, stop receiving the service.

Preferably, the configuration receiving module 1020 includes: a first configuration receiving unit or a second configuration receiving unit, where
the first configuration receiving unit is configured to receive the configuration information of the service that is sent by the base station by using a broadcast message; and
the second configuration receiving unit is configured to receive the configuration information of the service that is sent by the base station by using a paging message.

Preferably, the first configuration receiving unit is configured to receive the configuration information of the service that is sent by the base station by using a system information block SIB in broadcast information, where the SIB is any SIB.

Preferably, the arrival receiving module 1040 includes: a first arrival receiving unit, a second arrival receiving unit, or a third arrival receiving unit, where
the first arrival receiving unit is configured to receive the arrival indication of the service that is sent by the base station by using a paging message;
the second arrival receiving unit is configured to receive configuration information, sent by the base station by using a broadcast message, of an MCCH change notification corresponding to the service; and listen to the MCCH change notification according to the configuration information of the MCCH change notification, where the MCCH change notification is used for sending the arrival indication of the service to the UE; and
the third arrival receiving unit is configured to receive the arrival indication of the service that is sent by the base station by using a paging message, and receive configuration information, sent by the base station by using a broadcast message, of an MCCH change notification corresponding to the service; and listen to the MCCH change notification according to the configuration information of the MCCH change notification, where the MCCH change notification is used for sending the arrival indication of the service to the UE.

Preferably, the stop receiving module 1080 includes: a first stop receiving unit, a second stop receiving unit, or a third stop receiving unit, where
the first stop receiving unit is configured to receive the service stop indication that is sent by the base station to the UE by using a paging message;
the second stop receiving unit is configured to detect whether a predetermined quantity of empty data packets exist in the received service, where if a detection result is that the predetermined quantity of empty data packets exist, the predetermined quantity of empty data packets are used as the service stop indication; and
the third stop receiving unit is configured to receive Media Access Control MAC control signaling of a predetermined format sent by the base station, where the MAC control signaling of the predetermined format is used as the service stop indication.

More preferably, when the configuration information of the service includes: the time frequency resource corresponding to the service in the MBSFN subframe; or the MBSFN subframe corresponding to the service, and the time frequency resource corresponding to the service in the MBSFN subframe,
the UE 1000 further includes: a capability sending module 1090, where
the capability sending module 1090 is configured to send a capability indication to the base station, where the capability indication denotes that the UE possesses a capability of receiving the service and another service simultaneously in the MBSFN subframe corresponding to the service; and
the service receiving module 1060 includes: a first receiving unit, a first detecting unit, and a second receiving unit, where
the first receiving unit is configured to receive the service in the time frequency resource corresponding to the service in the MBSFN subframe configured in the configuration information of the service;
the service detecting unit is configured to detect whether the another service exists in a time frequency resource not corresponding to the service in the MBSFN subframe; and
the second receiving unit is configured to: if a detection result is that the another service exists, receive the another service in the time frequency resource not corresponding to the service in the MBSFN subframe.

Likewise, when the configuration information of the service includes: the time frequency resource corresponding to the service in the subframe; or the subframe corresponding to the service, and the time frequency resource corresponding to the service in the subframe,
the UE 1000 further includes: a capability sending module 1090, where
the capability sending module 1090 is configured to send a capability indication to the base station, where the capability indication denotes that the UE possesses a capability of receiving the service and another service simultaneously in the subframe corresponding to the service; and
the service receiving module 1060 includes: a third receiving unit, a third detecting unit, and a fourth receiving unit, where
the third receiving unit is configured to receive the service in the time frequency resource corresponding to the service in the subframe, the time frequency being configured in the configuration information of the service;
the third detecting unit is configured to detect whether the another service exists in a time frequency resource not corresponding to the service in the subframe; and
the fourth receiving unit is configured to: if a detection result is that the another service exists, receive the another service in the time frequency resource not corresponding to the service in the subframe.

To sum up, as a more preferable embodiment provided based on the embodiment shown in FIG. 9, on the basis of advantages of the embodiment shown in FIG. 9, in this embodiment, a subframe (which includes but is not limited to an MBSFN subframe) is further used to transmit an emergency service or a burst service; because a subframe itself is designed for transmitting service data, when a subframe is used to transmit an emergency service or a burst service, service data does not need to be divided into small data packets, and the service data may be transmitted by making full use of time frequency resources in multiple subframes. In comparison with a conventional technical solution in which an ETWS (Earthquake and Tsunami Warning System, earthquake and tsunami warning system) is restricted by a bearing capability of an SIB, and therefore an emergency service can only be transmitted in an SIB in a broadcast message after being divided into several small data packets, in the technical solution provided in this embodiment, a time delay during transmission of an emergency service or a burst service is very small, which can satisfy a requirement of an emergency service or a burst service with a large data volume on time delay performance.

Additionally, on the premise that UE possesses a corresponding capability, a base station not only transmits an emergency service or a burst service by using some time frequency resources in a subframe or an MBSFN subframe, but also schedules an area not corresponding to the emergency service or the burst service in the subframe or the MBSFN subframe for sending another service, where the another service may be a paging message, a broadcast message, a unicast service, or the like, so that in the subframe or the MBSFN subframe, not only is the emergency service or the burst service transmitted, but also the another service can be transmitted, thereby improving transmission and utilization efficiency of subframe resources. When an emergency event such as an earthquake or a tsunami occurs, in a scenario in which available communications resources may be greatly reduced due to device damage, this embodiment can be of relatively great practical use.

Referring to FIG. 11, FIG. 11 shows a structural block diagram of a service transmission system according to an embodiment of the present invention. The service transmission system includes a base station 1100 and UE 1200 (where the UE 1200 is optional in structural composition of the system), where the base station 1100 and the UE 1200 are connected to each other by using a wireless network. Specifically:
For the base station 1100, the base station 1100 includes: a processor 1120, a memory 1140, and a transmitter 1160, where
the processor 1120 is configured to control the transmitter 1160 to send configuration information of a service stored in the memory 1140 to user equipment UE;
the processor 1120 is further configured to control the transmitter 1160 to send an arrival indication of the service to the UE; and
the processor 1120 is further configured to send, according to the configuration information of the service sent by the transmitter 1160, the service stored in the memory 1140, so that after receiving the arrival indication of the service, the UE receives the service according to the configuration information of the service.

For the UE 1200, the UE 1200 includes: a receiver 1220, a processor 1240, and a memory 1260, where
the receiver 1220 is configured to receive configuration information of the service sent by a base station;
the memory 1260 is configured to store the configuration information of the service;
the receiver 1220 is configured to receive an arrival indication of the service sent by the base station; and
the processor 1240 is configured to: after the receiver 1220 receives the arrival indication of the service, control, according to the configuration information of the service stored in the memory 1260, the receiver 1220 to receive the service, where the service is sent by the base station according to the configuration information of the service.

To sum up, in the service transmission system provided in this embodiment, a base station sends configuration information of the service to UE, and triggers, by using an arrival indication of the service, the UE to receive a service, so as to resolve a problem that a conventional MBMS cannot transmit an emergency service or a burst service, and achieve an effect that the UE may be triggered by using the arrival indication of the service to receive the service, thereby satisfying a transmission requirement brought about by unpredictability of an emergency service or a burst service.

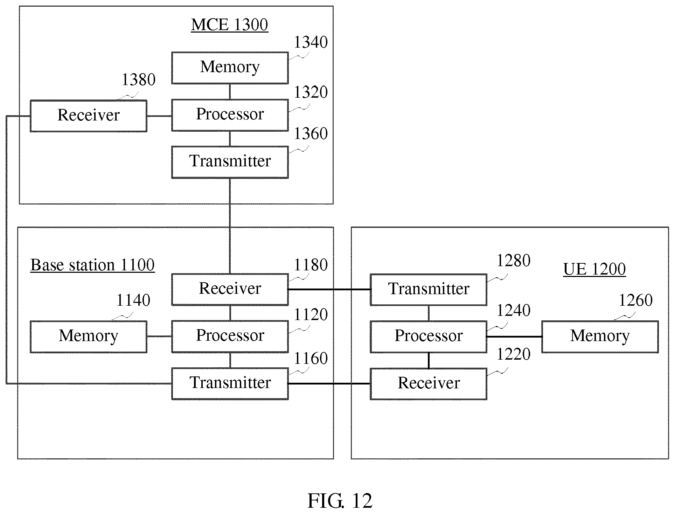

Referring to FIG. 12, FIG. 12 shows a structural block diagram of a service transmission system according to an embodiment of the present invention. The service transmission system includes an MCE 1300, a base station 1100 and UE 1200 (where the UE 1000 is optional in composition of the system), where the MCE 1300 and the base station 1100 are connected by using a wired network (such as an optic fiber), and the base station 1100 and the UE 1200 are connected to each other by using a wireless network. Specifically:
For the MCE 1300, the MCE 1300 includes: a processor 1320, a memory 1340, and a transmitter 1360, where
   the processor 1320 is configured to control the transmitter 1360 to: send configuration information of a service stored in the memory 1340 to the base station 1100, so that the base station 1100 receives the configuration information of the service, sends the configuration information of the service to the user equipment UE 1200, sends an arrival indication of the service to the UE 1200, and sends the service according to the configuration information of the service, so that after receiving the arrival indication of the service, the UE 1200 receives the service according to the configuration information of the service.

Preferably, the MCE 1300 further includes: a receiver 1380, where
the receiver 1380 is configured to receive an M2 setup request sent by the base station 1100; and
the transmitter 1360 is configured to feed back an M2 setup response to the base station 1100, where the M2 setup response carries the configuration information of the service.

The configuration information of the service is preferably of any of the following four types:
1) a non-multimedia broadcast multicast service single frequency network MBSFN area length and a modulation and coding scheme;
2) a non-MBSFN area length, a modulation and coding scheme, and an MBSFN subframe configuration corresponding to the service;
3) an MBSFN area identifier; and
4) a subframe configuration corresponding to the service and a modulation and coding scheme.

If the configuration information of the service is of the second type, the MBSFN subframe configuration corresponding to the service includes:
an MBSFN subframe corresponding to the service; or
a time frequency resource corresponding to the service in an MBSFN subframe; or
an MBSFN subframe corresponding to the service, and a time frequency resource corresponding to the service in the MBSFN subframe.

If the configuration information of the service is of the fourth type, the subframe configuration corresponding to the service includes:
a subframe corresponding to the service; or
a time frequency resource corresponding to the service in a subframe; or
a subframe corresponding to the service, and a time frequency resource corresponding to the service in the subframe.

For the base station 1100, the base station 1100 includes: a processor 1120, a memory 1140, a transmitter 1160, and a receiver 1180, where
the processor 1120 is configured to control the transmitter 1160 to send configuration information of a service stored in the memory 1140 to user equipment UE;
the processor 1120 is further configured to control the transmitter 1160 to send an arrival indication of the service to the UE; and
the processor 1120 is further configured to send the service stored in the memory 1140 according to the configuration information of the service sent by the transmitter 1160, so that after receiving the arrival indication of the service, the UE receives the service according to the configuration information of the service.

The processor 1120 is further configured to control the transmitter 1160 to send a service stop indication to the UE, so that after receiving the service stop indication, the UE stops receiving the service.

Preferably, the processor 1120 is configured to control the transmitter 1160 to send, by using a broadcast message, the configuration information of the service to the UE; or
the processor 1120 is configured to control the transmitter 1160 to send, by using a paging message, the configuration information of the service to the UE.

Preferably, the processor 1120 is configured to control the transmitter 1160 to send, by using a system information block SIB in the broadcast message, the configuration information of the service to the UE, where the SIB is any SIB.

Preferably, the processor 1120 is configured to control the transmitter 1160 to send, by using a paging message, the arrival indication of the service to the UE; or
the processor 1120 is configured to control the transmitter 1160 to send, by using a broadcast message, configuration information of an MCCH change notification corresponding to the service to the UE, where the MCCH change notification is used for sending the arrival indication of the service to the UE; or
the processor 1120 is configured to control the transmitter 1160 to send, by using a paging message, the arrival indication of the service to the UE, and send, by using a broadcast message, configuration information of an MCCH change notification corresponding to the service to the UE, where the MCCH change notification is used for sending the arrival indication of the service to the UE.

Preferably, the processor 1120 is configured to control the transmitter 1160 to send, by using a paging message, the service stop indication to the UE;
the processor 1120 is configured to add a predetermined quantity of empty data packets to a tail of the service sent by the transmitter 1160, where the predetermined quantity of empty data packets are used as the service stop indication; or
the processor 1120 is configured to control the transmitter 1160 to send Media Access Control MAC control signaling of a predetermined format to the UE, where the MAC control signaling of the predetermined format is used as the service stop indication.

Preferably, the receiver 1180 is configured to receive the configuration information of the service sent by a multi-cell/multicast coordination entity MCE; and
the processor 1120 is configured to store, in the memory 1140, the configuration information of the service received by the receiver 1180.

Preferably, the processor 1120 is configured to control the transmitter 1160 to send an M2 setup request to the MCE; and
the receiver 1180 is configured to receive an M2 setup response fed back by the MCE, where the M2 setup response carries the configuration information of the service.

Furthermore, when the configuration information of the service includes: the time frequency resource corresponding to the service in the MBSFN subframe; or the MBSFN subframe corresponding to the service, and the time frequency resource corresponding to the service in the MBSFN subframe,
the receiver 1180 is configured to receive a capability indication reported by the UE, where the capability indication denotes that the UE possesses a capability of receiving the service and another service simultaneously in the MBSFN subframe corresponding to the service; and
the processor 1120 is configured to control the transmitter 1160 to: send the service in the time frequency resource corresponding to the service in the MBSFN subframe configured in the configuration information of the service, and send the another service in a time frequency resource not corresponding to the service in the MBSFN subframe.

More preferably, when the configuration information of the service includes: the time frequency resource corresponding to the service in the subframe; or the subframe corresponding to the service, and the time frequency resource corresponding to the service in the subframe,
the receiver 1180 is configured to receive a capability indication reported by the UE, where the capability indication denotes that the UE possesses a capability of receiving the service and another service simultaneously in the subframe corresponding to the service; and
the processor 1120 is configured to control the transmitter 1160 to: send the service in the time frequency resource corresponding to the service in the subframe, the time frequency being configured in the configuration information of the service, and send the another service in a time frequency resource not corresponding to the service in the subframe.

For the terminal 1200, the terminal 1200 includes: a receiver 1220, a processor 1240, and a memory 1260, where
the receiver 1220 is configured to receive configuration information of a service sent by a base station;
the receiver 1220 is configured to receive an arrival indication of the service sent by the base station; and
the processor 1240 is configured to: after the receiver 1220 receives the arrival indication of the service, control, according to the configuration information of the service stored in the memory 1260, the receiver 1220 to receive the service, where the service is sent by the base station according to the configuration information of the service.

Preferably, the receiver 1220 is configured to receive the configuration information of the service that is sent by the base station by using a broadcast message; or
the receiver 1220 is configured to receive the configuration information of the service that is sent by the base station by using a paging message.

Preferably, the receiver 1220 is configured to receive the configuration information of the service that is sent by the base station by using a system information block SIB in broadcast information, where the SIB is any SIB.

Preferably, the receiver 1220 is configured to receive the arrival indication of the service that is sent by the base station by using a paging message; or
the receiver 1220 is configured to receive configuration information, sent by the base station by using a broadcast message, of an MCCH change notification corresponding to the service; and listen to the MCCH change notification according to the configuration information of the MCCH change notification, where the MCCH change notification is used for sending the arrival indication of the service to the UE; or
the receiver 1220 is configured to receive the arrival indication of the service that is sent by the base station by using a paging message, and receive configuration information, sent by the base station by using a broadcast message, of an MCCH change notification corresponding to the service; and listen to the MCCH change notification according to the configuration information of the MCCH change notification, where the MCCH change notification is used for sending the arrival indication of the service to the UE.

Preferably, the receiver 1220 is configured to receive a service stop indication sent by the base station; and
the processor 1240 is further configured to: after the receiver 1220 receives the service stop indication, control the receiver 1220 to stop receiving the service.

Preferably, the receiver 1220 is configured to receive the service stop indication that is sent by the base station to the UE by using a paging message; or
the processor 1240 is configured to detect whether a predetermined quantity of empty data packets exist in the service received by the receiver 1220, where if a detection result is that the predetermined quantity of empty data packets exist, the predetermined quantity of empty data packets are used as the service stop indication; or
the receiver 1220 is configured to receive Media Access Control MAC control signaling of a predetermined format sent by the base station, where the MAC control signaling of the predetermined format is used as the service stop indication.

More preferably, when the configuration information of the service includes: the time frequency resource corresponding to the service in the MBSFN subframe; or the MBSFN subframe corresponding to the service, and the time frequency resource corresponding to the service in the MBSFN subframe,
the UE further includes a transmitter 1280, where
the transmitter 1280 is configured to send a capability indication to the base station, where the capability indication denotes that the UE possesses a capability of receiving the service and another service simultaneously in the MBSFN subframe corresponding to the service;
the receiver 1220 is configured to receive the service in the time frequency resource corresponding to the service in the MBSFN subframe configured in the configuration information of the service;
the processor 1240 is configured to detect whether the another service exists in a time frequency resource not corresponding to the service in the MBSFN subframe; and
the receiver 1220 is configured to: if a detection result of the processor 1240 is that the another service exists, receive the another service in the time frequency resource not corresponding to the service in the MBSFN subframe.

More preferably, when the configuration information of the service includes: the time frequency resource corresponding to the service in the subframe; or the subframe corresponding to the service, and the time frequency resource corresponding to the service in the subframe,
the UE further includes a transmitter 1280, where
the transmitter 1280 is configured to send a capability indication to the base station, where the capability indication denotes that the UE possesses a capability of receiving the service and another service simultaneously in the subframe corresponding to the service;
the receiver 1220 is configured to receive the service in the time frequency resource corresponding to the service in the subframe, the time frequency being configured in the configuration information of the service;
the processor 1240 is configured to detect whether the another service exists in a time frequency resource not corresponding to the service in the subframe; and
the receiver 1220 is configured to: if a detection result of the processor 1240 is that the another service exists, receive the another service in the time frequency resource not corresponding to the service in the subframe.

To sum up, as a more preferable embodiment provided based on the embodiment shown in FIG. 11, on the basis of advantages of the embodiment shown in FIG. 11, in this embodiment, a subframe (which includes but is not limited to an MBSFN subframe) is further used to transmit an emergency service or a burst service; because a subframe itself is designed for transmitting service data, when a subframe is used to transmit an emergency service or a burst service, service data does not need to be divided into small data packets, and the service data may be transmitted by making full use of time frequency resources in multiple subframes. In comparison with a conventional technical solution in which an ETWS (Earthquake and Tsunami Warning System, earthquake and tsunami warning system) is restricted by a bearing capability of an SIB, and therefore an emergency service can only be transmitted in an SIB in a broadcast message after being divided into several small data packets, in the technical solution provided in this embodiment, a time delay during transmission of an emergency service or a burst service is very small, which can satisfy a requirement of an emergency service or a burst service with a large data volume on time delay performance.

Additionally, on the premise that UE possesses a corresponding capability, a base station not only transmits an emergency service or a burst service by using some time frequency resources in a subframe or an MBSFN subframe, but also schedules an area not corresponding to the emergency service or the burst service in the subframe or the MBSFN subframe for sending another service, where the another service may be a paging message, a broadcast message, a unicast service, or the like, so that in the subframe or the MBSFN subframe, not only is the emergency service or the burst service transmitted, but also the another service can be transmitted, thereby improving transmission and utilization efficiency of subframe resources. When an emergency event such as an earthquake or a tsunami occurs, in a scenario in which available communications resources may be greatly reduced due to device damage, this embodiment can be of relatively great practical use.

A person of ordinary skill in the art may understand that all or some of the steps of the embodiments may be implemented by hardware or a program instructing related hardware. The program may be stored in a computer-readable storage medium. The storage medium may include: a read-only memory, a magnetic disk, or an optical disc.

The foregoing descriptions are merely exemplary embodiments of the present invention, but are not intended to limit the present invention. Any modification, equivalent replacement, and improvement made without departing from the principle of the present invention shall fall within the protection scope of the present invention.

## Claims

1. A service transmission method, applied to a base station, wherein the method comprises:
sending (202; 302; 402) configuration information of a service to user equipment, UE, by using a broadcast message or a paging message;
sending (204; 304; 404) an arrival indication of the service to the UE, wherein the arrival indication of the service is used for the UE to receive the service from the base station according to the configuration information of the service after the UE receives the arrival indication of the service; and
sending (206; 306; 406) the service according to the configuration information of the service;
wherein the service refers to a service whose triggering is unpredictable; and wherein the service includes an emergency service or a burst service;
wherein a Multimedia Broadcast Service, MBMS, subframe is used to transmit the emergency service or the burst service such that service data is not divided into small packets, and the service data is transmitted by making full use of time frequency resources in multiple MBMS subframes;
wherein the configuration information of the service comprises:
a non-multimedia broadcast multicast service single frequency network, MBSFN, area length and a modulation and coding scheme; or
a non-MBSFN area length, a modulation and coding scheme, and an MBSFN subframe configuration corresponding to the service; or
an MBSFN area identifier; or
a subframe configuration corresponding to the service and a modulation and coding scheme;
wherein the MBSFN subframe configuration corresponding to the service comprises:
an MBSFN subframe corresponding to the service; or
a time frequency resource corresponding to the service in an MBSFN subframe; or
an MBSFN subframe corresponding to the service, and a time frequency resource corresponding to the service in the MBSFN subframe;
wherein the subframe configuration corresponding to the service comprises:
a subframe corresponding to the service; or
a time frequency resource corresponding to the service in a subframe; or
a subframe corresponding to the service, and a time frequency resource corresponding to the service in the subframe;
wherein the sending the arrival indication of the service to the UE comprises:
sending the arrival indication of the service to the UE by using a paging message; or
sending configuration information of an MCCH change notification corresponding to the service to the UE by using a broadcast message, wherein the MCCH change notification is used for sending the arrival indication of the service to the UE.

2. A service transmission method, applied to a user equipment, UE, wherein the method comprises:
receiving (202; 302; 402) configuration information of a service that is sent by the base station by using a broadcast message or a paging message;
receiving (204; 304; 404) an arrival indication of the service sent by the base station; and
after receiving the arrival indication of the service, receiving (206; 306; 406) the service according to the configuration information of the service, wherein the service is sent by the base station according to the configuration information of the service;
wherein the service refers to a service whose triggering is unpredictable; and wherein the service includes an emergency service or a burst service;
wherein a Multimedia Broadcast Service, MBMS, subframe is used to transmit the emergency service or the burst service such that service data is not divided into small packets, and the service data is transmitted by making full use of time frequency resources in multiple MBMS subframes;
wherein the configuration information of the service comprises:
a non-multimedia broadcast multicast service single frequency network, MBSFN, area length and a modulation and coding scheme; or
a non-MBSFN area length, a modulation and coding scheme, and an MBSFN subframe configuration corresponding to the service; or
an MBSFN area identifier; or
a subframe configuration corresponding to the service and a modulation and coding scheme;
wherein the MBSFN subframe configuration corresponding to the service comprises:
an MBSFN subframe corresponding to the service; or
a time frequency resource corresponding to the service in an MBSFN subframe; or
an MBSFN subframe corresponding to the service, and a time frequency resource corresponding to the service in the MBSFN subframe;
wherein the subframe configuration corresponding to the service comprises:
a subframe corresponding to the service; or
a time frequency resource corresponding to the service in a subframe; or
a subframe corresponding to the service, and a time frequency resource corresponding to the service in the subframe;
wherein the receiving the arrival indication of the service sent by the base station comprises:
receiving the arrival indication of the service that is sent by the base station by using a paging message; or
receiving configuration information, sent by the base station by using a broadcast message, of an MCCH change notification corresponding to the service; and listening to the MCCH change notification according to the configuration information of the MCCH change notification, wherein the MCCH change notification is used for sending the arrival indication of the service to the UE.

3. A base station, wherein the base station comprises:
a configuration sending module (920), configured to send configuration information of the service to user equipment, UE;
an arrival sending module (940), configured to send an arrival indication of the service to the UE, wherein the arrival indication of the service is used for the UE to receive the service from the base station according to the configuration information of the service after the UE receives the arrival indication of the service; and
a service sending module (960), configured to send the service according to the configuration information of the service;
wherein the service refers to a service whose triggering is unpredictable; and wherein the service includes an emergency service or a burst service;
wherein a Multimedia Broadcast Service, MBMS, subframe is used to transmit the emergency service or the burst service such that service data is not divided into small packets, and the service data is transmitted by making full use of time frequency resources in multiple MBMS subframes;
wherein the configuration information of the service comprises:
a non-multimedia broadcast multicast service single frequency network, MBSFN, area length and a modulation and coding scheme; or
a non-MBSFN area length, a modulation and coding scheme, and an MBSFN subframe configuration corresponding to the service; or
an MBSFN area identifier; or
a subframe configuration corresponding to the service and a modulation and coding scheme;
wherein the MBSFN subframe configuration corresponding to the service comprises:
an MBSFN subframe corresponding to the service; or
a time frequency resource corresponding to the service in an MBSFN subframe; or
an MBSFN subframe corresponding to the service, and a time frequency resource corresponding to the service in the MBSFN subframe;
wherein the subframe configuration corresponding to the service comprises:
a subframe corresponding to the service; or
a time frequency resource corresponding to the service in a subframe; or
a subframe corresponding to the service, and a time frequency resource corresponding to the service in the subframe;
wherein the configuration sending module comprises: a first configuration sending unit or a second configuration sending unit, wherein
the first configuration sending unit is configured to send the configuration information of the service to the UE by using a broadcast message; and
the second configuration sending unit is configured to send the configuration information of the service to the UE by using a paging message;
wherein the arrival sending module comprises: a first arrival sending unit or a second arrival sending unit, wherein
the first arrival sending unit is configured to send the arrival indication of the service to the UE by using a paging message;
the second arrival sending unit is configured to send configuration information of an MCCH change notification corresponding to the service to the UE by using a broadcast message, wherein the MCCH change notification is used for sending the arrival indication of the service to the UE.

4. A user equipment, UE, wherein the UE comprises:
a configuration receiving module (1020), configured to receive configuration information of the service sent by a base station;
an arrival receiving module (1040), configured to receive an arrival indication of the service sent by the base station; and
a service receiving module (1060), configured to: after the arrival indication of the service is received, receive the service according to the configuration information of the service, wherein the service is sent by the base station according to the configuration information of the service;
wherein the service refers to a service whose triggering is unpredictable; and wherein the service includes an emergency service or a burst service;
wherein a Multimedia Broadcast Service, MBMS, subframe is used to transmit the emergency service or the burst service such that service data is not divided into small packets, and the service data is transmitted by making full use of time frequency resources in multiple MBMS subframes;wherein the configuration information of the service comprises:
a non-multimedia broadcast multicast service single frequency network MBSFN area length and a modulation and coding scheme; or
a non-MBSFN area length, a modulation and coding scheme, and an MBSFN subframe configuration corresponding to the service; or
an MBSFN area identifier; or
a subframe configuration corresponding to the service and a modulation and coding scheme;
wherein the MBSFN subframe configuration corresponding to the service comprises:
an MBSFN subframe corresponding to the service; or
a time frequency resource corresponding to the service in an MBSFN subframe; or
an MBSFN subframe corresponding to the service, and a time frequency resource corresponding to the service in the MBSFN subframe.
wherein the subframe configuration corresponding to the service comprises:
a subframe corresponding to the service; or
a time frequency resource corresponding to the service in a subframe; or
a subframe corresponding to the service, and a time frequency resource corresponding to the service in the subframe;
wherein the configuration receiving module includes: a first configuration receiving unit or a second configuration receiving unit, where
the first configuration receiving unit is configured to receive the configuration information of the service that is sent by the base station by using a broadcast message; and
the second configuration receiving unit is configured to receive the configuration information of the service that is sent by the base station by using a paging message;
wherein the arrival receiving module comprises: a first arrival receiving unit or a second arrival receiving unit, wherein
the first arrival receiving unit is configured to receive the arrival indication of the service that is sent by the base station by using a paging message;
the second arrival receiving unit is configured to receive configuration information, sent by the base station by using a broadcast message, of an MCCH change notification corresponding to the service; and listen to the MCCH change notification according to the configuration information of the MCCH change notification, wherein the MCCH change notification is used for sending the arrival indication of the service to the UE.

## Patentansprüche

1. Dienstübertragungsverfahren, das auf eine Basisstation angewendet wird, wobei das Verfahren Folgendes umfasst:
Senden (202; 302; 402) von Konfigurationsinformationen eines Dienstes an ein Anwendergerät, UE, unter Verwendung einer Rundsendenachricht oder einer Funkrufnachricht;
Senden (204; 304; 404) einer Ankunftsangabe des Dienstes an das UE, wobei die Ankunftsangabe des Dienstes verwendet wird, damit das UE den Dienst von der Basisstation gemäß den Konfigurationsinformationen des Dienstes empfängt,
nachdem das UE die Ankunftsangabe des Dienstes empfangen hat; und
Senden (206; 306; 406) des Dienstes gemäß den Konfigurationsinformationen des Dienstes;
wobei sich der Dienst auf einen Dienst bezieht, dessen Auslösung unvorhersagbar ist;
und wobei der Dienst einen Notdienst oder einen "Burst"-Dienst enthält;
wobei ein Unterrahmen eines Multimedia-Rundsendedienstes, MBMS, verwendet wird, um den Notdienst oder den "Burst"-Dienst zu übertragen, so dass die Dienstdaten nicht in kleine Pakete unterteilt werden und die Dienstdaten übertragen werden, indem von den Zeit-Frequenz-Betriebsmitteln in mehreren MBMS-Unterrahmen vollständig Gebrauch gemacht wird;
wobei die Konfigurationsinformationen des Dienstes Folgendes umfassen:
eine Bereichslänge eines Nicht-Multimedia-Rundsende-"Multicast"-Dienst-Einzelfrequenz-Netzes, Nicht-MBSFN, und ein Modulations- und Codierungsschema; oder
eine Nicht-MBSFN-Bereichslänge, ein Modulations- und Codierungsschema und
eine MBSFN-Unterrahmenkonfiguration, die dem Dienst entspricht; oder
eine MBSFN-Bereichskennung; oder
eine Unterrahmenkonfiguration, die dem Dienst entspricht, und ein Modulations- und Codierungsschema;
wobei die MBSFN-Unterrahmenkonfiguration, die dem Dienst entspricht, Folgendes umfasst:
einen MBSFN-Unterrahmen, der dem Dienst entspricht; oder
ein Zeit-Frequenz-Betriebsmittel, das dem Dienst entspricht, in einem MBSFN-Unterrahmen; oder
einen MBSFN-Unterrahmen, der dem Dienst entspricht, und ein Zeit-Frequenz-Betriebsmittel, das dem Dienst entspricht, in dem MBSFN-Unterrahmen;
wobei die Unterrahmenkonfiguration, die dem Dienst entspricht, Folgendes umfasst:
einen Unterrahmen, der dem Dienst entspricht; oder
ein Zeit-Frequenz-Betriebsmittel, das dem Dienst entspricht, in einem Unterrahmen; oder
einen Unterrahmen, der dem Dienst entspricht, und ein Zeit-Frequenz-Betriebsmittel, das dem Dienst entspricht, in dem Unterrahmen;
wobei das Senden der Ankunftsangabe des Dienstes an das UE Folgendes umfasst:
Senden der Ankunftsangabe des Dienstes an das UE unter Verwendung einer Funkrufnachricht; oder
Senden von Konfigurationsinformationen einer MCCH-Wechselmeldung, die dem Dienst entspricht, unter Verwendung einer Rundsendenachricht an das UE, wobei die MCCH-Wechselmeldung zum Senden der Ankunftsangabe des Dienstes an das UE verwendet wird.

2. Dienstübertragungsverfahren, das auf ein Anwendergerät, UE, angewendet wird, wobei das Verfahren Folgendes umfasst:
Empfangen (202; 302; 402) von Konfigurationsinformationen eines Dienstes, die durch die Basisstation unter Verwendung einer Rundsendenachricht oder einer Funkrufnachricht gesendet werden;
Empfangen (204; 304; 404) einer durch die Basisstation gesendeten Ankunftsangabe des Dienstes; und
nach dem Empfangen der Ankunftsangabe des Dienstes Empfangen (206; 306; 406) des Dienstes gemäß den Konfigurationsinformationen des Dienstes, wobei der Dienst durch die Basisstation gemäß den Konfigurationsinformationen des Dienstes gesendet wird;
wobei sich der Dienst auf einen Dienst bezieht, dessen Auslösung unvorhersagbar ist;
und wobei der Dienst einen Notdienst oder einen "Burst"-Dienst enthält;
wobei ein Unterrahmen eines Multimedia-Rundsendedienstes, MBMS, verwendet wird, um den Notdienst oder den "Burst"-Dienst zu übertragen, so dass die Dienstdaten nicht in kleine Pakete unterteilt werden und die Dienstdaten übertragen werden, indem von den Zeit-Frequenz-Betriebsmitteln in mehreren MBMS-Unterrahmen vollständig Gebrauch gemacht wird;
wobei die Konfigurationsinformationen des Dienstes Folgendes umfassen:
eine Bereichslänge eines Nicht-Multimedia-Rundsende-"Multicast"-Dienst-Einzelfrequenz-Netzes, Nicht-MBSFN, und ein Modulations- und Codierungsschema; oder
eine Nicht-MBSFN-Bereichslänge, ein Modulations- und Codierungsschema und
eine MBSFN-Unterrahmenkonfiguration, die dem Dienst entspricht; oder
eine MBSFN-Bereichskennung; oder
eine Unterrahmenkonfiguration, die dem Dienst entspricht, und ein Modulations- und Codierungsschema;
wobei die MBSFN-Unterrahmenkonfiguration, die dem Dienst entspricht, Folgendes umfasst:
einen MBSFN-Unterrahmen, der dem Dienst entspricht; oder
ein Zeit-Frequenz-Betriebsmittel, das dem Dienst entspricht, in einem MBSFN-Unterrahmen; oder
einen MBSFN-Unterrahmen, der dem Dienst entspricht, und ein Zeit-Frequenz-Betriebsmittel, das dem Dienst entspricht, in dem MBSFN-Unterrahmen;
wobei die Unterrahmenkonfiguration, die dem Dienst entspricht, Folgendes umfasst:
einen Unterrahmen, der dem Dienst entspricht; oder
ein Zeit-Frequenz-Betriebsmittel, das dem Dienst entspricht, in einem Unterrahmen; oder
einen Unterrahmen, der dem Dienst entspricht, und ein Zeit-Frequenz-Betriebsmittel, das dem Dienst entspricht, in dem Unterrahmen;
wobei das Empfangen der durch die Basisstation gesendeten Ankunftsangabe des Dienstes Folgendes umfasst:
Empfangen der Ankunftsangabe des Dienstes, die durch die Basisstation unter Verwendung einer Funkrufnachricht gesendet wird; oder
Empfangen von Konfigurationsinformationen, die von der Basisstation unter Verwendung einer Rundsendenachricht gesendet werden, einer MCCH-Wechselmeldung, die dem Dienst entspricht; und Hören auf die MCCH-Wechselmeldung gemäß den Konfigurationsinformationen der MCCH-Wechselmeldung, wobei die MCCH-Wechselmeldung zum Senden der Ankunftsangabe des Dienstes an das UE verwendet wird.

3. Basisstation, wobei die Basisstation Folgendes umfasst:
ein Konfigurationssendemodul (920), das konfiguriert ist, Konfigurationsinformationen des Dienstes an ein Anwendergerät, UE, zu senden;
ein Ankunftssendemodul (940), das konfiguriert ist, eine Ankunftsangabe des Dienstes an das UE zu senden, wobei die Ankunftsangabe des Dienstes verwendet wird, damit das UE den Dienst von der Basisstation gemäß den Konfigurationsinformationen des Dienstes empfängt, nachdem das UE die Ankunftsangabe des Dienstes empfangen hat; und
ein Dienstsendemodul (960), das konfiguriert ist, den Dienst gemäß den Konfigurationsinformationen des Dienstes zu senden;
wobei sich der Dienst auf einen Dienst bezieht, dessen Auslösung unvorhersagbar ist;
und wobei der Dienst einen Notdienst oder einen "Burst"-Dienst enthält;
wobei ein Unterrahmen eines Multimedia-Rundsendedienstes, MBMS, verwendet wird, um den Notdienst oder den "Burst"-Dienst zu übertragen, so dass die Dienstdaten nicht in kleine Pakete unterteilt werden und die Dienstdaten übertragen werden, indem von den Zeit-Frequenz-Betriebsmitteln in mehreren MBMS-Unterrahmen vollständig Gebrauch gemacht wird;
wobei die Konfigurationsinformationen des Dienstes Folgendes umfassen:
eine Bereichslänge eines Nicht-Multimedia-Rundsende-"Multicast"-Dienst-Einzelfrequenz-Netzes, Nicht-MBSFN, und ein Modulations- und Codierungsschema; oder
eine Nicht-MBSFN-Bereichslänge, ein Modulations- und Codierungsschema und
eine MBSFN-Unterrahmenkonfiguration, die dem Dienst entspricht; oder
eine MBSFN-Bereichskennung; oder
eine Unterrahmenkonfiguration, die dem Dienst entspricht, und ein Modulations- und Codierungsschema;
wobei die MBSFN-Unterrahmenkonfiguration, die dem Dienst entspricht, Folgendes umfasst:
einen MBSFN-Unterrahmen, der dem Dienst entspricht; oder
ein Zeit-Frequenz-Betriebsmittel, das dem Dienst entspricht, in einem MBSFN-Unterrahmen; oder
einen MBSFN-Unterrahmen, der dem Dienst entspricht, und ein Zeit-Frequenz-Betriebsmittel, das dem Dienst entspricht, in dem MBSFN-Unterrahmen;
wobei die Unterrahmenkonfiguration, die dem Dienst entspricht, Folgendes umfasst:
einen Unterrahmen, der dem Dienst entspricht; oder
ein Zeit-Frequenz-Betriebsmittel, das dem Dienst entspricht, in einem Unterrahmen; oder
einen Unterrahmen, der dem Dienst entspricht, und ein Zeit-Frequenz-Betriebsmittel, das dem Dienst entspricht, in dem Unterrahmen;
wobei das Konfigurationssendemodul Folgendes umfasst: eine erste Konfigurationssendeeinheit oder eine zweite Konfigurationssendeeinheit, wobei die erste Konfigurationssendeeinheit konfiguriert ist, die Konfigurationsinformationen des Dienstes unter Verwendung einer Rundsendenachricht an das UE zu senden; und
die zweite Konfigurationssendeeinheit konfiguriert ist, die Konfigurationsinformationen des Dienstes unter Verwendung einer Funkrufnachricht an das UE zu senden;
wobei das Ankunftssendemodul Folgendes umfasst: eine erste Ankunftssendeeinheit oder eine zweite Ankunftsendeeinheit, wobei
die erste Ankunftssendeeinheit konfiguriert ist, die Ankunftsangabe des Dienstes unter Verwendung einer Funkrufnachricht an das UE zu senden;
die zweite Ankunftssendeeinheit konfiguriert ist, die Konfigurationsinformationen einer MCCH-Wechselmeldung, die dem Dienst entspricht, unter Verwendung einer Rundsendenachricht an das UE zu senden, wobei die MCCH-Wechselmeldung zum Senden der Ankunftsangabe des Dienstes an das UE verwendet wird.

4. Anwendergerät, UE, wobei das UE Folgendes umfasst:
ein Konfigurationsempfangsmodul (1020), das konfiguriert ist, die durch eine Basisstation gesendeten Konfigurationsinformationen des Dienstes zu empfangen;
ein Ankunftsempfangsmodul (1040), das konfiguriert ist, eine durch die Basisstation gesendete Ankunftsmeldung des Dienstes zu empfangen; und
ein Dienstempfangsmodul (1060), das für Folgendes konfiguriert ist: nachdem die Ankunftsangabe des Dienstes empfangen worden ist, den Dienst gemäß den Konfigurationsinformationen des Dienstes zu empfangen, wobei der Dienst gemäß den Konfigurationsinformationen des Dienstes durch die Basisstation gesendet wird;
wobei sich der Dienst auf einen Dienst bezieht, dessen Auslösung unvorhersagbar ist;
und wobei der Dienst einen Notdienst oder einen "Burst"-Dienst enthält;
wobei ein Unterrahmen eines Multimedia-Rundsendedienstes, MBMS, verwendet wird, um den Notdienst oder den "Burst"-Dienst zu übertragen, so dass die Dienstdaten nicht in kleine Pakete unterteilt werden und die Dienstdaten übertragen werden, indem von den Zeit-Frequenz-Betriebsmitteln in mehreren MBMS-Unterrahmen vollständig Gebrauch gemacht wird; wobei die Konfigurationsinformationen des Dienstes Folgendes umfassen:
eine Bereichslänge eines Nicht-Multimedia-Rundsende-"Multicast"-Dienst-Einzelfrequenz-Netzes, Nicht-MBSFN, und ein Modulations- und Codierungsschema; oder
eine Nicht-MBSFN-Bereichslänge, ein Modulations- und Codierungsschema und eine MBSFN-Unterrahmenkonfiguration, die dem Dienst entspricht; oder
eine MBSFN-Bereichskennung; oder
eine Unterrahmenkonfiguration, die dem Dienst entspricht, und ein Modulations- und Codierungsschema;
wobei die MBSFN-Unterrahmenkonfiguration, die dem Dienst entspricht, Folgendes umfasst:
einen MBSFN-Unterrahmen, der dem Dienst entspricht; oder
ein Zeit-Frequenz-Betriebsmittel, das dem Dienst entspricht, in einem MBSFN-Unterrahmen; oder
einen MBSFN-Unterrahmen, der dem Dienst entspricht, und ein Zeit-Frequenz-Betriebsmittel, das dem Dienst entspricht, in dem MBSFN-Unterrahmen;
wobei die Unterrahmenkonfiguration, die dem Dienst entspricht, Folgendes umfasst:
einen Unterrahmen, der dem Dienst entspricht; oder
ein Zeit-Frequenz-Betriebsmittel, das dem Dienst entspricht, in einem Unterrahmen; oder
einen Unterrahmen, der dem Dienst entspricht, und ein Zeit-Frequenz-Betriebsmittel, das dem Dienst entspricht, in dem Unterrahmen;
wobei das Konfigurationsempfangsmodul Folgendes enthält: eine erste Konfigurationsempfangseinheit oder eine zweite Konfigurationsempfangseinheit, wobei
die erste Konfigurationsempfangseinheit konfiguriert ist, die Konfigurationsinformationen des Dienstes, die durch die Basisstation unter Verwendung einer Rundsendenachricht gesendet werden, zu empfangen; und
die zweite Konfigurationsempfangseinheit konfiguriert ist, die Konfigurationsinformationen des Dienstes, die durch die Basisstation unter Verwendung einer Funkrufnachricht gesendet werden, zu empfangen;
wobei das Ankunftsempfangsmodul Folgendes umfasst: eine erste Ankunftsempfangseinheit oder eine zweite Ankunftsempfangseinheit, wobei die erste Ankunftsempfangseinheit konfiguriert ist, die Ankunftsangabe des Dienstes, die durch die Basisstation unter Verwendung einer Funkrufnachricht gesendet wird, zu empfangen;
die zweite Ankunftsempfangseinheit konfiguriert ist, die durch die Basisstation unter Verwendung einer Rundsendenachricht gesendeten Konfigurationsinformationen einer MCCH-Wechselmeldung, die dem Dienst entspricht, zu empfangen; und auf die MCCH-Wechselmeldung gemäß den Konfigurationsinformationen der MCCH-Wechselmeldung zu hören, wobei die MCCH-Wechselmeldung zum Senden der Ankunftsangabe des Dienstes an das UE verwendet wird.

## Revendications

1. Procédé de transmission de service, appliqué à une station de base, dans lequel le procédé consiste à :
envoyer (202 ; 302 ; 402) des informations de configuration d'un service à un équipement utilisateur (UE) à l'aide d'un message de diffusion ou d'un message de radiomessagerie ;
envoyer (204 ; 304 ; 404) une indication d'arrivée du service à l'UE, dans lequel l'indication d'arrivée du service est utilisée pour que l'UE reçoive le service en provenance de la station de base en fonction des informations de configuration du service après que l'UE reçoit l'indication d'arrivée du service ; et
envoyer (206 ; 306 ; 406) le service en fonction des informations de configuration du service ;
dans lequel le service se réfère à un service dont le déclenchement est imprévisible ;
et dans lequel le service comprend un service d'urgence ou un service en rafale ;
dans lequel une sous-trame de service de diffusion multimédia (MBMS) est utilisée pour transmettre le service d'urgence ou le service en rafale de telle sorte que des données de service ne soient pas divisées en petits paquets et les données de service sont transmises en faisant plein usage des ressources temps-fréquence dans de multiples sous-trames de service MBMS ;
dans lequel les informations de configuration du service comprennent :
une longueur de zone de réseau monofréquence de service de diffusion et de multidiffusion (MBSFN) qui n'est pas multimédia et un schéma de modulation et de codage ; ou
une longueur de zone de réseau non MBSFN, un schéma de modulation et de codage et une configuration de sous-trame de réseau MBSFN correspondant au service ; ou
un identifiant de zone de réseau MBSFN ; ou
une configuration de sous-trame correspondant au service et un schéma de modulation et de codage ;
dans lequel la configuration de sous-trame de réseau MBSFN correspondant au service comprend :
une sous-trame de réseau MBSFN correspondant au service ; ou
une ressource temps-fréquence correspondant au service dans une sous-trame de réseau MBSFN ; ou
une sous-trame de réseau MBSFN correspondant au service et une ressource temps-fréquence correspondant au service dans la sous-trame de réseau MBSFN ;
dans lequel la configuration de sous-trame correspondant au service comprend :
une sous-trame correspondant au service ; ou
une ressource temps-fréquence correspondant au service dans une sous-trame ; ou
une sous-trame correspondant au service et une ressource temps-fréquence correspondant au service dans la sous-trame ;
dans lequel l'envoi de l'indication d'arrivée du service à l'UE consiste à :
envoyer l'indication d'arrivée du service à l'UE en utilisant un message de radiomessagerie ; ou
envoyer des informations de configuration d'une notification de changement de canal MCCH correspondant au service à l'UE en utilisant un message de diffusion, dans lequel la notification de changement de canal MCCH est utilisée pour envoyer l'indication d'arrivée du service à l'UE.

2. Procédé de transmission de service, appliqué à un équipement utilisateur (UE), dans lequel le procédé consiste à :
recevoir (202 ; 302 ; 402) des informations de configuration d'un service qui sont envoyées par la station de base à l'aide d'un message de diffusion ou d'un message de radiomessagerie ;
recevoir (204 ; 304 ; 404) une indication d'arrivée du service envoyé par la station de base ; et
après la réception de l'indication d'arrivée du service, recevoir (206 ; 306 ; 406) le service en fonction des informations de configuration du service, dans lequel le service est envoyé par la station de base en fonction des informations de configuration du service ;
dans lequel le service se réfère à un service dont le déclenchement est imprévisible ;
et dans lequel le service comprend un service d'urgence ou un service en rafale ;
dans lequel une sous-trame de service de diffusion multimédia (MBMS) est utilisée pour transmettre le service d'urgence ou le service en rafale de telle sorte que des données de service ne soient pas divisées en petits paquets et les données de service sont transmises en faisant plein usage des ressources temps-fréquence dans de multiples sous-trames de service MBMS ;
dans lequel les informations de configuration du service comprennent :
une longueur de zone de réseau monofréquence de service de diffusion et de multidiffusion (MBSFN) qui n'est pas multimédia et un schéma de modulation et de codage ; ou
une longueur de zone de réseau non MBSFN, un schéma de modulation et de codage et une configuration de sous-trame de réseau MBSFN correspondant au service ; ou
un identifiant de zone de réseau MBSFN ; ou
une configuration de sous-trame correspondant au service et un schéma de modulation et de codage ;
dans lequel la configuration de sous-trame de réseau MBSFN correspondant au service comprend :
une sous-trame de réseau MBSFN correspondant au service ; ou
une ressource temps-fréquence correspondant au service dans une sous-trame de réseau MBSFN ; ou
une sous-trame de réseau MBSFN correspondant au service et une ressource temps-fréquence correspondant au service dans la sous-trame de réseau MBSFN ;
dans lequel la configuration de sous-trame correspondant au service comprend :
une sous-trame correspondant au service ; ou
une ressource temps-fréquence correspondant au service dans une sous-trame ; ou
une sous-trame correspondant au service et une ressource temps-fréquence correspondant au service dans la sous-trame ;
dans lequel la réception de l'indication d'arrivée du service envoyé par la station de base consiste à :
recevoir l'indication d'arrivée du service qui est envoyé par la station de base en utilisant un message de radiomessagerie ; ou
recevoir des informations de configuration, envoyées par la station de base, en utilisant un message de diffusion, d'une notification de changement de canal MCCH correspondant au service ; et écouter la notification de changement de canal MCCH en fonction des informations de configuration de la notification de changement de canal MCCH, dans lequel la notification de changement de canal MCCH est utilisée pour envoyer l'indication d'arrivée du service à l'UE.

3. Station de base, dans laquelle la station de base comprend :
un module d'envoi de configuration (920), configuré pour envoyer des informations de configuration du service à un équipement utilisateur (UE) ;
un module d'envoi d'arrivée (940), configuré pour envoyer une indication d'arrivée du service à l'UE, dans laquelle l'indication d'arrivée du service est utilisée pour que l'UE reçoive le service en provenance de la station de base en fonction des informations de configuration du service après que l'UE reçoit l'indication d'arrivée du service ; et
un module d'envoi de service (960), configuré pour envoyer le service en fonction des informations de configuration du service ;
dans laquelle le service se réfère à un service dont le déclenchement est imprévisible ; et dans laquelle le service comprend un service d'urgence ou un service en rafale ;
dans laquelle une sous-trame de service de diffusion multimédia (MBMS) est utilisée pour transmettre le service d'urgence ou le service en rafale de telle sorte que des données de service ne soient pas divisées en petits paquets et les données de service sont transmises en faisant plein usage des ressources temps-fréquence dans de multiples sous-trames de service MBMS ;
dans laquelle les informations de configuration du service comprennent :
une longueur de zone de réseau monofréquence de service de diffusion et de multidiffusion (MBSFN) qui n'est pas multimédia et un schéma de modulation et de codage ; ou
une longueur de zone de réseau non MBSFN, un schéma de modulation et de codage et une configuration de sous-trame de réseau MBSFN correspondant au service ; ou
un identifiant de zone de réseau MBSFN ; ou
une configuration de sous-trame correspondant au service et un schéma de modulation et de codage ;
dans laquelle la configuration de sous-trame de réseau MBSFN correspondant au service comprend :
une sous-trame de réseau MBSFN correspondant au service ; ou
une ressource temps-fréquence correspondant au service dans une sous-trame de réseau MBSFN ; ou
une sous-trame de réseau MBSFN correspondant au service et une ressource temps-fréquence correspondant au service dans la sous-trame de réseau MBSFN ;
dans laquelle la configuration de sous-trame correspondant au service comprend :
une sous-trame correspondant au service ; ou
une ressource temps-fréquence correspondant au service dans une sous-trame ; ou
une sous-trame correspondant au service et une ressource temps-fréquence correspondant au service dans la sous-trame ;
dans laquelle le module d'envoi de configuration comprend : une première unité d'envoi de configuration ou une seconde unité d'envoi de configuration, dans laquelle la première unité d'envoi de configuration est configurée pour envoyer les informations de configuration du service à l'UE en utilisant un message de diffusion ;
et
la seconde unité d'envoi de configuration est configurée pour envoyer les informations de configuration du service à l'UE en utilisant un message de radiomessagerie ;
dans laquelle le module d'envoi d'arrivée comprend : une première unité d'envoi d'arrivée ou une seconde unité d'envoi d'arrivée, dans laquelle la première unité d'envoi d'arrivée est configurée pour envoyer l'indication d'arrivée du service à l'UE en utilisant un message de radiomessagerie ;
la seconde unité d'envoi d'arrivée est configurée pour envoyer des informations de configuration d'une notification de changement de canal MCCH correspondant au service à l'UE en utilisant un message de diffusion, dans laquelle la notification de changement de canal MCCH est utilisée pour envoyer l'indication d'arrivée du service à l'UE.

4. Équipement utilisateur (UE), dans lequel l'UE comprend :
un module de réception de configuration (1020), configuré pour recevoir des informations de configuration du service envoyé par une station de base ;
un module de réception d'arrivée (1040), configuré pour recevoir une indication d'arrivée du service envoyé par la station de base ; et
un module de réception de service (1060), configuré : après que l'indication d'arrivée du service est reçue, pour recevoir le service en fonction des informations de configuration du service, dans lequel le service est envoyé par la station de base en fonction des informations de configuration du service ;
dans lequel le service se réfère à un service dont le déclenchement est imprévisible ;
et dans lequel le service comprend un service d'urgence ou un service en rafale ;
dans lequel une sous-trame de service de diffusion multimédia (MBMS) est utilisée pour transmettre le service d'urgence ou le service en rafale de telle sorte que des données de service ne soient pas divisées en petits paquets et les données de service sont transmises en faisant plein usage des ressources temps-fréquence dans de multiples sous-trames de service MBMS ; dans lequel les informations de configuration du service comprennent :
une longueur de zone de réseau monofréquence de service de diffusion et de multidiffusion (MBSFN) qui n'est pas multimédia et un schéma de modulation et de codage ; ou
une longueur de zone de réseau non MBSFN, un schéma de modulation et de codage et une configuration de sous-trame de réseau MBSFN correspondant au service ; ou un identifiant de zone de réseau MBSFN ; ou
une configuration de sous-trame correspondant au service et un schéma de modulation et de codage ;
dans lequel la configuration de sous-trame de réseau MBSFN correspondant au service comprend :
une sous-trame de réseau MBSFN correspondant au service ; ou
une ressource temps-fréquence correspondant au service dans une sous-trame de réseau MBSFN ; ou
une sous-trame de réseau MBSFN correspondant au service et une ressource temps-fréquence correspondant au service dans la sous-trame de réseau MBSFN ;
dans lequel la configuration de sous-trame correspondant au service comprend :
une sous-trame correspondant au service ; ou
une ressource temps-fréquence correspondant au service dans une sous-trame ; ou
une sous-trame correspondant au service et une ressource temps-fréquence correspondant au service dans la sous-trame ;
dans lequel le module de réception de configuration comprend : une première unité de réception de configuration ou une seconde unité de réception de configuration, où la première unité de réception de configuration est configurée pour recevoir les informations de configuration du service qui est envoyé par la station de base en utilisant un message de diffusion ; et
la seconde unité de réception de configuration est configurée pour recevoir les informations de configuration du service qui est envoyé par la station de base en utilisant un message de radiomessagerie ;
dans lequel le module de réception d'arrivée comprend : une première unité de réception d'arrivée ou une seconde unité de réception d'arrivée, dans lequel la première unité de réception d'arrivée est configurée pour recevoir l'indication d'arrivée du service qui est envoyé par la station de base en utilisant un message de radiomessagerie ;
la seconde unité de réception d'arrivée est configurée pour recevoir des informations de configuration, envoyées par la station de base en utilisant un message de diffusion, d'une notification de changement de canal MCCH correspondant au service ; et écouter la notification de changement de canal MCCH en fonction des informations de configuration de la notification de changement de canal MCCH, dans lequel la notification de changement de canal MCCH est utilisée pour envoyer l'indication d'arrivée du service à l'UE.
